# EUROPÄISCHE PATENTSCHRIFT

(11) **EP 1 817 383 B1**
(45) Veröffentlichungstag und Bekanntmachung des Hinweises auf die Patenterteilung: **25.02.2009**
(21) Anmeldenummer: 05813903.1
(22) Anmeldetag: 02.12.2005
(51) Int. Cl.: C09D 5/32, C09D 7/00, C04B 41/48

(54) **DUNKLES, FLÄCHIGES ELEMENT MIT GERINGER WÄRMELEITFÄHIGKEIT, VERRINGERTER DICHTE UND NIEDRIGER SOLARER ABSORPTION**
DARK, FLAT ELEMENT HAVING LOW HEAT CONDUCTIVITY, REDUCED DENSITY AND LOW SOLAR ABSORPTION
ELEMENT PLAT FONCE A CONDUCTIVITE THERMIQUE MINIME, A DENSITE REDUITE ET A ABSORPTION SOLAIRE FAIBLE

(30) Priorität: 03.12.2004 DE 102004058425
(43) Veröffentlichungstag der Anmeldung: 15.08.2007
(73) Patentinhaber: Construction Research & Technology GmbH, 83308 Trostberg (DE)
(72) Erfinder: HUGO, Gerd, 86938 Schondorf (DE)
(74) Vertreter: HOFFMANN EITLE
(86) Internationale Anmeldenummer: PCT/EP2005/012927
(87) Internationale Veröffentlichungsnummer: WO 2006/058782

(56) Entgegenhaltungen:
- EP-A- 0 548 822
- WO-A-00/24833
- WO-A-02/12405
- WO-A-96/22337
- WO-A-02/057374
- DE-A1- 19 540 682

## Beschreibung

Die vorliegende Erfindung betrifft ein dunkles, flächiges Element, vorzugsweise aus einem Kunststoff, einer Lackschicht oder einem Faserstoff, mit verringerter Dichte, geringer Wärmeleitfähigkeit und niedriger solarer Absorption.

Flächen, die aus ästhetischen oder auch aus technischen Gründen dunkel eingefärbt oder beschichtet sind und die dem Sonnenlicht ausgesetzt sind, haben die meist unangenehme Eigenschaft, sich je nach Farbtiefe unter Sonneneinwirkung mehr oder weniger aufzuheizen.

Gerade in kleineren Räumlichkeiten, wie z.B. in einem Fahrzeug, sei es ein PKW, ein LKW, ein Bus oder auch der Innenraum von Eisenbahnwaggons, wird die solare Aufheizung dunkler Flächen als äußerst unangenehm empfunden. Die dunklen Flächen heizen sich je nach solarem Absorptionsgrad mehr oder weniger stark auf und geben diese aufgenommene Wärme als Wärmestrahlung und über die Luftkonvektion in den Innenraum ab. So können sich Lenkräder von PKW, die im Sommer einige Stunden in der Sonne stehen, auf über 80°C aufheizen.

Die einmal von den dunklen Flächen in einem Fahrzeug absorbierte Sonnenenergie kann das Fahrzeug nicht direkt verlassen, da die Fenster des Fahrzeuges im Bereich der Wärmestrahlung im langwelligen Infrarot bei 5 bis 50 µm nicht transparent und bei einem abgestellten oder geparkten Fahrzeug auch normalerweise geschlossen sind, so dass auch kein Luftaustausch stattfinden kann.

Die dunkle Einfärbung der Flächen in einem Fahrzeug ist teilweise technisch bedingt, da sich z.B. eine helle Frontablage in der Windschutzscheibe spiegeln würde und damit die Sicht aus dem Fahrzeug negativ beeinflusst. Sitzoberflächen sind aus ästhetischen und praktischen Gründen bevorzugt dunkel eingefärbt, da helle Flächen sehr rasch verschmutzen.

Die relativ hohe Wärmespeicherfähigkeit dieser dunklen Flächen trägt ebenfalls nachhaltig zur Erwärmung des Innenraumes eines Fahrzeuges bei. Je höher die Wärmekapazität und die Wärmeleitung in das Material sind, desto mehr Sonnenenergie kann in den Materialien gespeichert werden. Die Wärmeabgabe erfolgt dann langsam über die Wärmestrahlung und konvektiv über die Luft. Während die erwärmte Luft relativ schnell durch Öffnen der Fenster während der Fahrt ausgetauscht werden kann, sind die Insassen eines Fahrzeuges jedoch so lange der Strahlungswärme ausgesetzt, bis der Wärmespeicher, wie z.B. die Frontablage oder der Armaturenträger, "leer," also abgekühlt ist. Diese Wärmestrahlung kann nur beim Betrieb des Fahrzeuges über die Klimaanlage kompensiert werden. Nachteilig ist, dass selbst moderne Klimaanlagen im Betrieb den Kraftstoffverbrauch eines Fahrzeuges um etwa 10 % erhöhen. Neben der hohen Wärmeaufnahme tragen diese Flächen auch durch ihr Gewicht zum Kraftstoffverbrauch eines Fahrzeuges bei, weshalb ein niedrigeres Gewicht beispielsweise über eine verringerte Rohdichte wünschenswert ist.

Ein anderer Anwendungsbereich für dunkle Flächen sind z.B. Kunststoffverschalungen von Häusern und Fensterrahmen aus Kunststoff, wie sie vor allem in den USA üblich sind. Obwohl die Einfärbung dieser Schalungen und Fensterrahmen nicht in extrem dunklen, sondern eher in mittleren Farbtönen ausgeführt ist, weisen sie ein erstaunlich hohes solares Absorptionsvermögen auf. Sie heizen sich deshalb unter Sonneneinwirkung stark auf, was zu einer schnellen Materialermüdung und Alterung führt. Darüber hinaus ist ihre Wärmeleitfähigkeit zu hoch, als dass sie einen positiven Beitrag zur thermischen Isolierung des Gebäudes leisten könnten.

Ein weiterer Anwendungsbereich sind Dachbedeckungen, die z.B. in den USA üblicherweise aus Bitumenschindeln aber auch aus Betonschindeln bestehen. Diese Dachschindeln sind überwiegend in dunkleren Grün-, Grau- und Rottönen gehalten und ihre solare Absorption ist meist größer als 80%. Auch hier führt die hohe solare Absorption insbesondere bei den Bitumenschindeln zu einer schnellen Materialermüdung, weshalb sie bei extremen Wettersituationen, wie z.B. Hagelschlag, keinen Schutz für das Haus mehr bieten können. Darüber hinaus ist der Wärmewiderstand dieser Dachbedeckungen zu gering, als dass sie einen Beitrag zur thermischen Isolierung des Daches leisten könnten.

In dem Patent US 4,272,291 (Shtern et al.) wird eine Hitze reflektierende Beschichtung beschrieben, die gegen Witterungseinflüsse schützen und das Aufheizen von Metalloberflächen insbesondere an Kraftstofftanks reduzieren soll. Erreicht werden soll dies durch die Wechselwirkung anorganischer Metallverbindungen in der Bindemittel-haltigen Beschichtungsformulierung. Nachteilig ist jedoch, dass diese Beschichtung keinerlei Wärme isolierende Wirkung hat.

Aus der japanischen Offenlegungsschrift JP 11-323197 (Anmeldenummer JP 10-130742) ist eine Beschichtung mit hitzeisolierender Wirkung bekannt, die außerdem gute Abstrahleigenschaften aufweist und gegenüber Hitzestrahlungen gute Langwelleneigenschaften, wodurch sie gegenüber großen Hitzeeinflüssen isolierende Eigenschaften besitzt. Die Beschichtung weist transparente oder lichtdurchlässige Vakuumhohlkugeln aus keramischem Material auf und strukturerhaltende Hilfsmittel, die eine dichte Packung der Keramikbläschen und deren flächige Anordnung nach dem Ausbringen der Beschichtung als Film gewährleisten sollen. Als derartige Hilfsmittel sollen Acrylamid-Derivate, Polyethylenwachse, Bentonit und Silika-Partikel geeignet sein: Aber auch Cellulose, Acrylsäurepolymere und Polyvinylalkohol sind geeignet. Diese Beschichtung besteht zu 30 bis 60 % aus den genannten Hohlbläschen.

Ebenfalls eine Beschichtung die gegen Hitzeeinflüsse schützen soll, ist aus der japanischen Offenlegungsschrift JP 2000-129172 (Anmeldenummer 10-305968) bekannt. Es werden spezifische Pigmente mit einem Trägermaterial kombiniert, das eine ausgezeichnete Witterungsbeständigkeit aufweist. Dadurch soll eine Wärmeschutzbeschichtung mit ausgeprägten Reflektionseigenschaften im nahen Infrarotbereich entstehen, die zudem auch dann nur relativ wenig aufheizt, wenn die Beschichtung insgesamt schwarz oder in einer dunklen Farbe gehalten ist. Das hierfür eingesetzte Pigment absorbiert Licht im sichtbaren Bereich und reflektiert Licht im nahen Infrarotbereich. Als Trägermaterial wird ein Acrylharz eingesetzt. Auch in diesem Fall kann die beschriebene Beschichtung keine wärmeisolierende Wirkung entfalten. Hinweise zur Dichte und Wärmeleitfähigkeit der beschriebenen Beschichtung sind diesem Dokument ebenfalls nicht zu entnehmen.

Aus DE-A1 44 18 214 ist ein Anstrichstoff mit einem niedrigen Emissions- bzw. einem hohen Reflektionsvermögen im Wellenbereich der Wärmestrahlung bekannt. Dieser Anstrichstoff enthält ein Bindemittel mit hoher Transparenz im Bereich der Wärmestrahlung und insbesondere im Bereich der Wellenlängen von 3 bis 50 µm sowie Teilchen, die eine hohe Transparenz in diesem Wellenlängenbereich aufweisen und deren Brechungsindex im Wellenlängenbereich der Wärmestrahlung von dem Brechungsindex des Bindemittels verschieden ist.

Durch EP 0 804 513 B1 (entsprechend WO 96/22337) ist ein Anstrichstoff mit reflektierenden Eigenschaften in zwei Wellenlängenbereichen und absorbierenden Eigenschaften in einem dritten Wellenbereich geschützt. Dieser Anstrichstoff enthält im Wesentlichen ein Bindemittel mit einer Transparenz > 40 % und einem Brechungsindex n < 2,0 in einem Wellenlängenbereich von 0,38 bis 0,75 µm (erster Wellenlängenbereich) und in einem Wellenlängenbereich von 5 bis 100 µm (dritter Wellenlängenbereich). In dieses Bindemittel sind plättchenförmige Teilchen mit definierter Dicke und Fläche sowie einem Reflexionsvermögen R im dritten Wellenlängenbereich > 40 % enthalten. Außerdem enthält dieses Bindemittel zweite Teilchen, die die ersten plättchenförmigen Teilchen zum Teil überdecken und die im ersten und dritten Wellenlängenbereich eine Transparenz > 40 % und in einem Wellenlängenbereich von 0,8 bis 2,5 µm (zweiter Wellenlängenbereich) eine Absorption > 20 % aufweisen und die außerdem einen definierten Brechungsindex im ersten Wellenlängenbereich besitzen. Dieser Anstrichstoff kann als Wand-, Dach- oder Fassadenfarbe für Gebäude oder Behälter verwendet werden.

Ein Beschichtungsstoff der zur Energieeinsparung bei Häusern und Gebäuden geeignet ist und der im Innen- und Außenbereich in der Lage ist, Sonnenenergie zu absorbieren ohne diese direkt wieder im langwelligen Bereich des thermischen Infrarot zu emittieren, ist aus EP 0 942 954 B1 bekannt. Dieser Beschichtungsstoff besteht aus einem Bindemittel mit großer Transparenz, ersten plättchenförmigen Teilchen, die insbesondere im Wellenbereich des thermischen Infrarot reflektieren, und ersten kugelförmigen Teilchen, die im Wellenlängenbereich des thermischen Infrarot rückstreuen und in diesem Wellenlängenbereich einen definierten Transmissionsgrad aufweisen und/oder zweiten kugelförmigen Teilchen, die im trockenen Zustand einen Hohlraum haben und im Bereich des thermischen Infrarot einen definierten Transmissionsgrad aufweisen sowie im Wellenlängenbereich des thermischen Infrarot rückstreuen und/oder reflektieren. Ferner enthält dieser Beschichtungsstoff zweite Teilchen, die im Wellenlängenbereich des sichtbaren Lichtes reflektieren und/oder rückstreuen und im Wellenlängenbereich des thermischen Infrarot einen definierten Transmissionsgrad aufweisen und die als Einkristalle vorliegen. Weitere Bestandteile sind Polymerpigmente, die im thermischen Infrarot einen definierten Transmissionsgrad aufweisen und im trockenen Zustand einen Hohlraum haben, dritte kugelförmige Teilchen, die elektrisch leitend sind und im Bereich des thermischen Infrarot eine geringe Absorption aufweisen sowie sonstige und an sich bekannte Zusätze, die üblicherweise in Beschichtungen zur Anwendung kommen.

Die europäische Patentschrift EP 1 137 722 B1 (entsprechend WO 00/24833) betrifft eine spektralselektive Beschichtung, die Sonnenenergie im Infrarotbereich weniger stark absorbiert und die einen geringen thermischen Emissionsgrad besitzt. Diese Beschichtung ist insbesondere für die vordere Ablagefläche von Kraftfahrzeugen geeignet und zeichnet sich durch drei Komponenten aus, bei denen es sich um ein Bindemittel mit definierter Transmission im Wellenlängenbereich des nahen Infrarot und einer ebenfalls definierten Transmission im Wellenlängenbereich des thermischen Infrarot handelt. Die zweite Komponente stellt ein erstes Pigment dar, welches im Wellenlängenbereich des sichtbaren Lichtes absorbiert, im nahen Infrarot eine Rückstreuung von mindestens 40 % aufweist und im Wellenlängenbereich des thermischen Infrarot eine Absorption von 60 % oder weniger besitzt. Die dritte Komponente schließlich stellt ein zweites Pigment dar, welches im Wellenlängenbereich des thermischen Infrarot eine Rückstreuung und/oder Reflexion von ≥ 40 % besitzt.

Eine Beschichtung mit geringer solarer Absorption ist aus US 2004/0068046 (entsprechend WO02/057374) A1 bekannt. Diese Beschichtung besteht im Wesentlichen aus vier Komponenten, bei denen es sich um ein Bindemittel, erste Pigmente, zweite Pigmente und/oder dritte Pigmente sowie einen Füllstoff handelt. Die Bindemittelkomponente muss eine Transparenz von > 60 % im Wellenlängenbereich des ultravioletten und sichtbaren Lichtes sowie im nahen Infrarotbereich besitzen und außerdem eine Transparenz < 70 % im thermischen Infrarotbereich. Die ersten Pigmente zeichnen sich durch eine Transparenz > 70 % im Wellenlängenbereich von 300 bis 2 500 nm aus, wobei die Partikelgröße so auszuwählen ist, dass die Rückstrahlung > 70 % im nahen Infrarot-Wellenlängenbereich beträgt. Die zweiten Pigmente müssen im sichtbaren Wellenlängenbereich spektralselektiv absorbieren, eine Transparenz im nahen Infrarotbereich > 50 % aufweisen, sowie eine Absorption im thermischen Infrarotbereich > 40 %. Auch die dritten Pigmente müssen im spektralselektiven Bereich des sichtbaren Lichtes absorbieren und/oder 50 % im Wellenbereich des sichtbaren Lichtes absorbieren, sowie im nahen Infrarotbereich reflektieren. Die eingesetzten Füllstoffe sollen den Brechungsindex der Bindemittelmatrix reduzieren, wobei die Matrix aus Mikrohohlkugeln besteht, die mit Gas oder Luft gefüllt sind und eine definierte Partikelgröße aufweisen. Derartige Beschichtungen sind insbesondere für Oberflächen geeignet, die aus technischen oder ästhetischen Gründen dunkel gefärbt sind und dabei gleichzeitig dem Sonnenlicht ausgesetzt sind, so dass sie sich extrem aufheizen.

Ein flächiges Bauelement aus Metall, dessen äußere Oberfläche so beschichtet ist, dass sie im Bereich des nahen Infrarot Sonnenlicht reflektiert und dessen innere Oberfläche einen niedrigen Emissionsgrad für Wärmestrahlung besitzt, ist aus dem deutschen Patent DE 102 04 829 C1 bekannt. Dieses flächige Bauelement ist an seiner ersten äußeren Oberfläche mit erster Beschichtung versehen, die das Metall vor Korrosion schützt und Sonnenlicht im Wellenlängenbereich von 320 bis 1 200 nm im Mittel zu 60 % reflektiert. Seine erste äußere Fläche ist mit einer zweiten Beschichtung versehen, die im Wellenlängenbereich des sichtbaren Lichtes eine Reflexion < 60 % hat und im Wellenlängenbereich des nahen Infrarot eine Reflexion > 60 %. Die zweite innere Oberfläche des Bauelements ist mit einer ersten Beschichtung versehen, die das Metall vor Korrosion schützt und die zweite innere Fläche mit einer zweiten Beschichtung, die im Wellenlängenbereich des thermischen Infrarot niedrig emittierend ist und einen Emissionsgrad < 0,75 besitzt.

Aufgabe der vorliegenden Erfindung Weitere Wärmestrahlen reflektierende Körper sind in WO 02/12405, DE 19 540 682 sowie EP 054 882 212 offenbart. ist es, übliche, vor allem dunklere Flächen in den genannten Anwendungsbereichen so zu gestalten, dass sie weniger Sonnenlicht absorbieren und sich so weniger erwärmen.

Erfindungsgemäß wird dies gelöst durch ein dunkles, flächiges Element mit geringer Wärmeleitfähigkeit, verringerter Dichte und niedriger solarer Absorption, das dadurch gekennzeichnet ist, dass
a) es mindestens eine Kombination aus einem Trägermaterial mit darin eingelagerten Komponenten aufweist, wobei b) die Kombination a) eine Wärmeleitfähigkeit kleiner 0,4 [W/m·K] hat und
c) eine Rohdichte, die unter 1,4 g/cm² liegt, d) dass das Element eine mittlere Reflexion im Wellenlängenbereich des sichtbaren Lichtes von 400 bis 700 nm hat, die kleiner 50 % ist und e) dass das Element eine mittlere Reflexion im Wellenlängenbereich des nahen Infrarot von 700 bis 1 000 nm hat, die größer 50 % ist.

Vorteilhafte Weiterbildungen des Erfindungsgedankens ergeben sich aus den Unteransprüchen.

Überraschend hat sich bei zahlreichen Anwendungen des erfindungsgemäßen Elements herausgestellt, dass eine Kombination aus einem Material mit gleichzeitig geringer Wärmeleitfähigkeit und Dichte mit einer möglichst hohen Reflexion an der Materialoberfläche im unsichtbaren, nahen Infrarotbereich, mehrere synergetische Effekte mit sich bringt. So wird ein dunkler Gegenstand, wie z. B. ein PKW-Lenkrad deutlich weniger heiß, wenn die Oberfläche dieses Gegenstands im nahen Infrarot reflektierend ist: Steht beispielsweise ein PKW lange genug in der Sonne, heizt sich das Lenkrad konvektiv auf das Niveau der Innenluft auf.

Aufgrund einer gleichzeitig verringerten Wärmeleitfähigkeit und Dichte des Lenkrades heizt es sich aber nicht so schnell auf und man kann es ohne Probleme anfassen, obwohl im umgebenden Raum hohe Temperaturen vorherrschen.

Auch bei typischen Anwendungen im Bereich der Gebäudetechnik ergeben sich durch die erfindungsgemäße Kombination von hoher Reflexion einer Oberfläche im nahen Infrarotbereich mit einer geringen Wärmeleitfähigkeit und Dichte der Gesamtanordnung überraschende, synergetische Effekte. So wird z.B. ein Wandpaneel aus PVC mit den Merkmalen des erfindungsgemäßen Elementes zum einen weniger heiß als ein übliches PVC-Wandpaneel; zum anderen wird durch die geringere Wärmeleitfähigkeit und Dichte des Paneels weniger der dennoch absorbierten Sonnenenergie über Wärmeleitung in das Gebäude eingebracht. Darüber hinaus verringern die niedrigere Oberflächentemperatur und die verlangsamten Temperaturwechsel die thermisch bedingte Materialermüdung der Gesamtanordnung.

Als besonders günstig hat sich ein Trägermaterial erwiesen, bei dem es sich um einen Kunststoff, eine Lackschicht, ein Fasermaterial, eine hydraulisch abbindende Masse und/oder ein Verbundmaterial handelt. Bezüglich des Kunststoffs als Trägermaterial sollte dieser ausgewählt werden aus der Reihe der Polyamide, Polyacetate, Polyester, Polycarbonate, Polyolefine, wie z. B. Polyethylen, Polypropylen und Polyisopropylen, der Styrolpolymere, wie z. B. Acrylnitril/Butadien/Styrol ABS, Polystyrol, Styrol/Butadien, Styrol/Acrylnitril, Acrylnitril/Styrol/Acrylester, der Schwefelpolymere, wie z. B. Polysulfon, Polyethersulfon, Polyphenylsulfon, der Fluorkunststoffe, wie z. B. PTFE (Polytetrafluorethylen) und PVDF (Polyvinylidenfluorid), der Polyimide, Polymethylmethacrylate PMMA, wie z. B. Polyvinylchlorid, der Silikone, wie z. B. Silikonkautschuk, der Epoxydharze, der Polymer-Blends, wie z. B. Polyphenylenoxid, Polycarbonat - ABS sowie der Melamin-, Phenolharze und Polyurethane und deren geeignete Mischungen.

Als besonders vorteilhaft hat sich ein Trägermaterial erwiesen, das sowohl ein reaktiv vernetzender Kunststoff wie auch ein thermoplastischer Kunststoff sein kann.

Falls als Trägermaterial eine Lackschicht als Komponente a) im erfindungsgemäßen Element enthalten sein soll, sollte diese aus einem Bindemittel gebildet sein, das ausgewählt ist aus der Reihe der wässrigen Bindemittel, vorzugsweise wasserlöslichen Binder aus Alkyden, Polyester, Polyacrylate, Epoxyde und Epoxydester, der wässrigen Dispersionen und Emulsionen, und vorzugsweise Dispersionen und Emulsionen auf der Basis von Acrylaten, Styrol-Acrylaten, Ethylen-Acrylsäure-Copolymeren, Methacrylaten, Vinylpyrrolidon-Vinylacetat-Copolymeren, Polyvinylpyrrolidon, Polyisopropylacrylat, Polyurethan, Silikon und Polyvinylacetaten, der Wachsdispersionen, vorzugsweise auf Basis von Polyethylen, Polypropylen, Teflon^{®}, synthetische Wachse, fluorierte Polymere, fluoriertes Acryl-Copolymer in wässriger Lösung, Fluorsilikone, dass es ausgewählt ist aus terminal und lateral und/oder intrachenar fluormodifizierten Polyurethanharzen, vorzugsweise Polyurethan-Dispersionen und Polyurethan-Polymer-Hybrid-Dispersionen und Mischungen aus diesen.

Die Lackschicht kann aber auch aus einem Bindemittel gebildet sein, das ausgewählt ist aus der Reihe der lösemittelhaltigen Bindemittel, vorzugsweise Acrylate, Styrol-Acrylate, Polyvinyle, Polyvinylchlorid, Polystyrene und Styrene Copolymere, Alkydharze, gesättigte und ungesättigte Polyester, Hydroxid-funktionale Polyester, MelaminFormaldehyd-Harze, Polyisocyanat-Harze, Polyurethane, Epoxydharze, Fluorpolymere und Silikone, chlorsulfoniertes Polyäthylen, fluorierte Polymere, fluoriertes Acryl-Copolymer, Fluorsilikone, Plastisole, PVDF (Polyvinylidenfluorid), dass es ausgewählt ist aus terminal und lateral und/oder intrachenar fluormodifizierten Polyurethanharzen, vorzugsweise Polyurethan-Dispersionen und Polyurethan-Polymer-Hybrid-Dispersionen und Mischungen aus diesen.. Mit dem Ausdruck "terminal und lateral und/oder intrachenar fluormodifizierte Polyurethanharze" werden vorzugsweise fluormodifizierte Polymere gekennzeichnet, die endständig und/oder seitenständig und/oder in der Hauptkette polymere Strukturelemente auf Basis von Perfluoralkyl(en)- und/oder Polyhexafluorpropenoxid-Gruppen enthalten.

Hinsichtlich des Trägermaterials besteht eine weitere Variante der Erfindung darin, als Fasermaterial Leder aus tierischen Häuten im Element zu verwenden.

Eine weitere vorteilhafte Weiterbildung des Erfindungsgedankens ist dadurch gegeben, dass es sich bei der hydraulisch abbindenden Masse um eine Mischung auf Basis von Zement, Calciumsulfat oder Anhydrit handelt und vorzugsweise um einen Beton, Mörtel oder Gips.

Bezüglich des Verbundmaterials sollte dieses insbesondere synthetische und/oder natürliche Fasern enthalten, vorzugsweise synthetische Fasern aus Kunststoffen und/oder keramischen Stoffen, insbesondere Glas und/oder Kohlenstoff und/oder natürliche Fasern aus Wolle, Baumwolle, Sisal, Hanf und Zellulose.

Schließlich können die in das Trägermaterial eingelagerten Komponenten aus folgenden Gruppen ausgewählt werden:
a) anorganische und/oder organische Leichtfüllstoffe, die vorzugsweise die Dichte und die Wärmeleitfähigkeit des Trägermateriales herabsetzen, b) Gase, wie z. B. Luft, Stickstoff, Kohlendioxid, Edelgase, die im Trägermaterial Hohlräume bilden und die Dichte und die Wärmeleitfähigkeit des Trägermateriales herabsetzen und c) Farbstoffe, die im Wellenlängenbereich des sichtbaren Lichtes von 400 bis 700 nm spektralselektiv reflektieren und im Wellenlängenbereich des nahen Infrarot von 700 bis 1 000 nm eine mittlere Transparenz von größer 50 % aufweisen und/oder d) erste Pigmente, die im Wellenlängenbereich des sichtbaren Lichtes von 400 bis 700 nm spektralselektiv reflektieren und im Wellenlängenbereich des nahen Infrarot von 700 bis 1 000 nm eine mittlere Transparenz von größer 50 % aufweisen und/oder e) zweite Pigmente, die im Wellenlängenbereich des sichtbaren Lichtes von 400 bis 700 nm spektralselektiv reflektieren und im Wellenlängenbereich des nahen Infrarot von 700 bis 1 000 nm eine mittlere Reflexion von größer 50 % aufweisen, f) anorganische und/oder organische Nanomaterialien, die oberflächenbehandelt oder oberflächenbeschichtet sein können.

Unter dem Begriff "Nanomaterialien" oder auch "Nanopartikel" versteht man allgemein Teilchen mit etwa kugelförmiger Geometrie, die in allen Dimensionen kleiner als 100 nm sind, wobei keine Untergrenze definiert ist. Nanomaterialien, die üblicherweise aus Nanopartikeln bestehen oder diese überwiegend enthalten, nehmen somit hinsichtlich ihrer Größe einen Platz im Übergangsbereich zwischen atomaren und - kontinuierlichen makroskopischen Strukturen ein. Typische Beispiele für anorganische Nanopartikel sind nanoskaliges Siliziumdioxid, Titandioxid, Zinkoxid, Silica-Sole, Wasserglas, Metallkolloide und Pigmente, die auch funktionalisiert sein können. Dispersionen und insbesondere feinstteilige Dispersionen, Polyurethan-Dispersionen und Core-Shell-Dispersionen), aber auch Pigmente, Dendrimere und ggf. funktionalisierte hyperverzweigte Polymere sind typische Vertreter der organischen Nanomaterialien. Im vorliegenden Fall haben sich als anorganische Nanomaterialien Füllstoffe aus der Aerosil-Serie der Degussa AG als besonders geeignet erwiesen. Generell sind aber alle Füllstoffe geeignet, die im sichtbaren und nahen Infrarotbereich nicht absorbieren und deren Teilchengröße unter 100 nm liegt.

Die Auswahl der in das Trägermaterial eingelagerten Komponenten und insbesondere der oben genannten Komponenten c) bis e) erfolgt üblicherweise mit Hilfe technischer Methoden. So wird die Reflexion von Oberflächen, aber auch von Pigmenten und Füllstoffen üblicherweise mit einem Spektrometer gemessen, wie z.B. das PC-Einschub-Spektrometer PC 2000 der Fa. Avantes, mit einer spektralen Empfindlichkeit von 320 bis 1100 nm, so dass Bereiche vom UV - über den sichtbaren Bereich bis in den nahen Infrarot-Bereich abgedeckt sind. Mit einer an das Spektrometer angeschlossenen Ulbrichtkugel wird die hemisphärische Rückstreuung von Oberflächen gemessen und so die Reflexion bestimmt. Dabei dient eine Bariumsulfatplatte als Referenz, die quasi 100% Reflexion darstellt. Bei der Vermessung von Pigmenten und Füllstoffen in Pulverform, füllt man diese in einen Polyäthylenbeutel, der in dem genannten Wellenlängenbereich transparent ist. Um zwischen der Reflexion einer Schicht und der Transmission dieser Schicht unterscheiden zu können, wird die Schicht einmal auf einem absorbierenden, also schwarzen Untergrund, und auf einem zu 100% reflektierenden, also weißen Untergrund vermessen.

Insbesondere sollte es sich bei den Leichtfüllstoffen um solche handeln, deren Dichte unter 0,5 g/cm³liegt.

Als besonders bevorzugt wird ein Element angesehen, dessen Komponente a) ein Trägermaterial umfasst, das als eingelagerte Komponenten Mikrohohlkugeln aus einem keramischen Material, aus Glas oder aus einem Kunststoff enthält, wobei die Dichte von Mikrohohlkugeln aus Glas oder einem anderen keramischen Material unter 0,4 g/cm³liegt und die Dichte von Mikrohohlkugeln, die aus einem Kunststoff bestehen, unter 0,2 g/cm³ liegen sollte.

Eine vorteilhafte Weiterbildung des Erfindungsgedankens ist darin zu sehen, dass es sich bei den Leichtfüllstoffen um Kunststoffteilchen handelt, die erst bei Aufheizen des Trägermateriales auf Temperaturen von 80 bis 160°C Mikrohohlkugeln mit einer Dichte unter 0,2 g/cm³ ausbilden.

Von der vorliegenden Erfindung werden Farbstoffe als bevorzugt angesehen, bei denen es sich um wasserlösliche Farbstoffe handelt, die ausgewählt werden aus sauren Farbstoffen, substantiven Farbstoffen, basischen Farbstoffen, Entwicklungsfarbstoffen, Schwefelfarbstoffen und Anilinfarbstoffen, oder aus Farbstoffen aus der Gruppe der Farbstoffe, die mit Lösemitteln gelöst werden oder aus Zaponfarbstoffen.

Die ersten Pigmente sollten in vorteilhafter Weise aus der Reihe der organischen Pigmente stammen, vorzugsweise der Azopigmente, wie z. B. Monoazo-, Disazo-, α-Naphthol-, Naphthol-AS-, verlackte Azo-, Benzimidazolon-, Disazokondensations-, Metallkomplex-, Isoindolinon- und Isoindolin-Pigmente, der polycyclischen Pigmente und vorzugsweise der Phthalocyanin-, Chinacridon-, Perylen- und Perinon-, Thioindigo-, Anthrachinon-, Anthrapyrimidin-, Flavanthron-, Pyranthron-, Indanthron-, Anthanthron-, Dioxazin-, Triarylcarbonium-, Chino-phthalon-, Diketo-pyrrolo-pyrrol-Pigmente.

Hinsichtlich der zweiten Pigmente berücksichtigt die vorliegende Erfindung eine Variante, bei der es sich um anorganische Pigmente handelt, ausgewählt aus der Reihe der Metalloxide und -Hydroxide, aus Cadmium-, Wismut-, Chrom-, Ultramarinpigmente, der beschichteten, plättchenförmigen Glimmerpigmente und insbesondere der Rutil- und Spinellmischphasenpigmente.

Schließlich sieht die Erfindung auch vor, dass in das Trägermaterial weitere Teilchen eingebracht werden können, die im Wellenlängenbereich von 400 bis 1 000 nm eine Reflexion größer 70 % aufweisen. Diese weiteren Teilchen sollten insbesondere aus der Gruppe der anorganischen Pigmente, aus der Gruppe der Metalloxide, der Metallsulfate, der Metallsulfide, der Metallfluoride, der Metallsilikate, der Metallcarbonate sowie Mischungen aus diesen ausgewählt werden.

Auch können die weiteren Teilchen ausgewählt sein aus der Gruppe der abbaubaren Materialien; es kann sich aber auch umCalciumcarbonat, Magnesiumcarbonat, Talkum, Zirkonsilikat, Zirkonoxid, Aluminiumoxid, natürlichem Bariumsulfat und Mischungen daraus handeln.

Ein erfindungswesentliches Merkmal des flächigen Elements ist in der Wärmeleitfähigkeit der Kombination des Trägermaterials mit den darin eingelagerten Komponenten zu sehen. Diesbezüglich ist es als bevorzugt anzusehen, wenn die Wärmeleitfähigkeit des gesamten Elements kleiner 0,3 [W/m.K] und besonders bevorzugt kleiner 0,2 [W/m.K] ist.

Auch kann es von Vorteil sein, wenn die Rohdichte des gesamten Elements unter 1,2 g/cm³ und besonders bevorzugt unter 1,0 g/cm³ liegt.

Ein weiteres erfindungswesentliches Merkmal ist in der mittleren Reflexion des Elements im Wellenlängenbereich des sichtbaren Lichtes von 400 bis 700 nm zu sehen. Diese sollte insbesondere < 40 % sein.

Eine vorteilhafte Weiterbildung des beanspruchten Elements ist dadurch gegeben, dass es eine mittlere Reflexion im Wellenlängenbereich des nahen Infrarot von 700 bis 1 000 nm hat, die > 60 % ist.

Auch wird von der Erfindung berücksichtigt, wenn die Leichtfüllstoffe die Reflexion des Elements im nahen Infrarotbereich von 700 bis 1 000 nm um bis zu 10 % erhöhen.

Gemäß vorliegender Erfindung muss die Kombination a) die Merkmale b) (Wärmleitfähigkeit) und c) (Rohdichte) aufweisen. Diese Kombination aus Trägermaterial und eingelagerten Komponenten kann aber auch zusätzlich zu den Merkmalen Wärmeleitfähigkeit und Rohdichte die Merkmale d) und/oder e) des Elements besitzen.

Das Element selbst kann erfindungsgemäß auch aus mindestens zwei Schichten zusammengesetzt sein, wobei in diesem Fall mindestens eine Schicht aus der Kombination a) bestehen sollte.

Auch kann die Kombination a) mit einer Schicht aus einem Trägermaterial kombiniert sein, das keine eingelagerten Komponenten enthält, was von der vorliegenden Erfindung ebenfalls berücksichtigt wird.

Als besonders vorteilhaft ist es auch anzusehen, wenn gleiche oder verschiedene Ausführungsformen des Elements in mindestens zwei Schichten übereinander kombinierbar sind. Das Element kann auch mit einer zusätzlichen Lackschicht versehen sein, bei der es sich vorzugsweise um eine transparente Form handelt.

Hinsichtlich des Elements kann dieses mit einem tragenden Untergrund in Form einer Anordnung, Vorrichtung oder einer Schicht kombiniert sein, wobei es dann insgesamt selbst eine tragende Anordnung darstellen kann.

Insgesamt ist festzuhalten, dass das beanspruchte dunkle, flächige Element zwingend aus einer Kombination aus einem Trägermaterial mit darin eingelagerten Komponenten besteht, wobei diese Kombination eine definierte Wärmeleitfähigkeit und eine spezielle Rohdichte aufweisen muss. Dieses Element kann somit ausschließlich aus dieser Kombination a) bestehen, muss es aber nicht, sondern kann darüber hinaus noch weitere Komponenten enthalten. Beim Element selbst kann es sich somit bspw. um ein speziell behandeltes Leder, eine Kunststoffform, bspw. für Fahrzeuginneneinrichtungen, oder aber auch um eine Verkleidungsplatte bzw. eine Schindel handeln. Aufgrund der unterschiedlichsten Varianten kann das beanspruchte Element auch aus einer Grund- oder Tragstruktur bestehen, auf der bspw. die Kombination a) befestigt oder daran angebracht ist. Insgesamt muss jedoch das flächige Gesamtelement dunkel sein, was durch das erfindungswesentliche Merkmal d), also die geringe mittlere Reflexion im Wellenlängenbereich des sichtbaren Lichtes von 400 bis 700 nm von < 50 %, vorgegeben ist. Aus dem Wortlaut von Anspruch 1, der den eigentlichen Erfindungsgegenstand kennzeichnet, wird die Vielfalt der Möglichkeiten der vorliegenden Erfindung deutlich, da sie sich nicht nur auf Verkleidungen oder Beschichtungen beschränkt, sondern auch aus Kombinationen bestehend aus Unter- oder Tragkonstruktionen bzw. Grundierungsschichten und sich darauf befindenden Kombinationen aus einem Trägermaterial und den darin eingelagerten Komponenten bestehen kann.
Die nachfolgenden Beispiele verdeutlichen die Vorteile der eben beschriebenen Erfindung.

### Beispiele

### Figuren

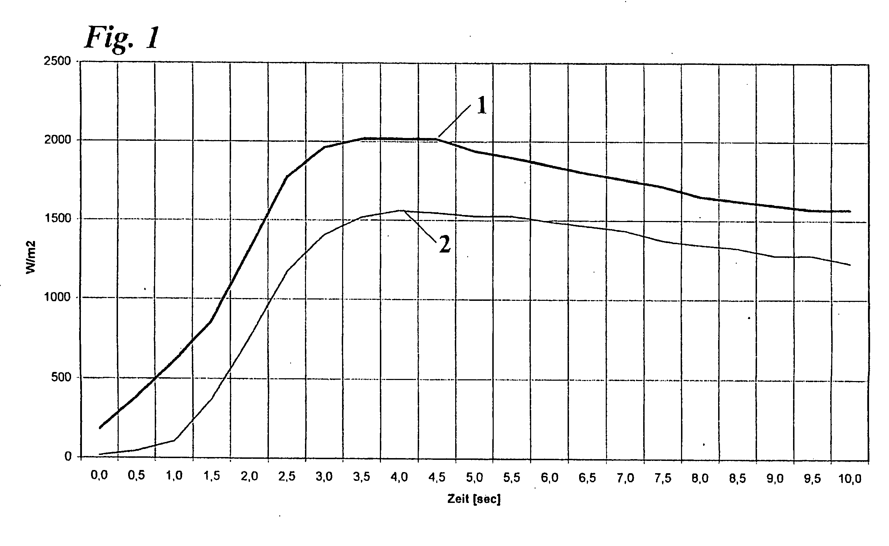

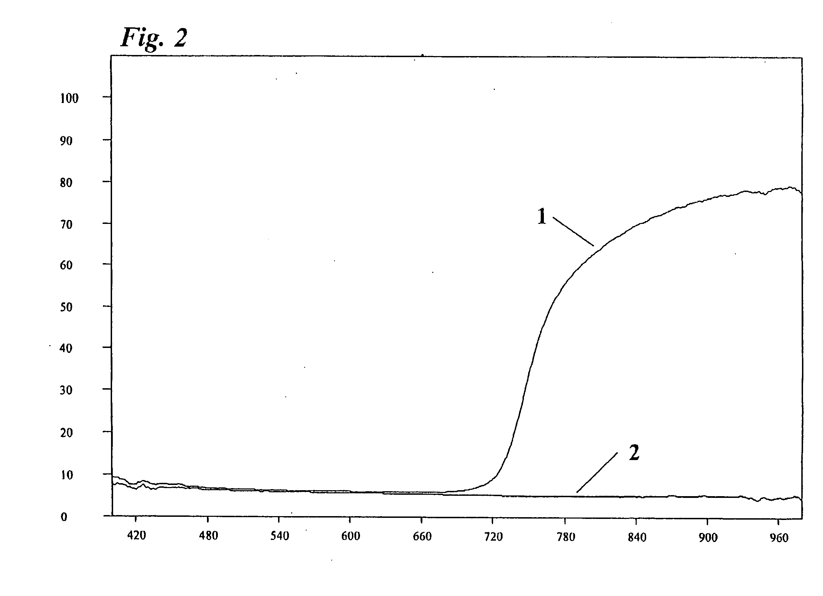

In den Figuren 1, 3 und 4 wird der Wärmefluss durch eine in den Beispielen beschriebene Materialprobe dargestellt. Bei diesen Messungen wird ein Universal Wärmefluss-Sensor F-035-2 mit den Maßen 25 X 25 mm der Firma Wuntronic München eingesetzt, der eine zum Wärmefluss äquivalente Spannung abgibt. Die Figuren 2, sowie 5 bis 11 zeigen als Messergebnisse die spektrale Reflexion der Proben aus den jeweiligen Beispielen im Wellenlängenbereich 400 bis 980 nm. Als Messgerät dient ein PC-Einschub-Spektrometer PC 2000 der Fa. Avantes, mit einer spektralen Empfindlichkeit von 320 bis 1100 nm, mit einer daran angeschlossenen Ulbrichtkugel zur Messung der hemisphärischen Rückstreuung von Oberflächen.

### Beispiel 1

Einfärbung und Beschichtung eines Leders für Autositze:

Ein Stück Leder wird mit dem Farbstoff Sella Cool Black 10286 der Firma TFL Ledertechnik Basel, schwarz eingefärbt.
Es wird folgende schwarze Beschichtung hergestellt:

| | |
|---|---|
| 15,00 g | Roda Cool Black Pigmentpräparation der TFL Ledertechnik Basel |
| 60,00 g | Roda Car B32 der TFL Ledertechnik Basel |
| 10,00 g | Roda Car P64 der TFL Ledertechnik Basel |
| 10,00 g | Wasser |
| 01,20 g | Expancel 091 DE Mikrohohlkugeln der Firma Akzo Nobel |

Die Beschichtung wird mit einem Rakel drei mal mit einer Schichtdicke von 100 µm aufgetragen und nach jeder Schicht im Laborofen getrocknet.
Das so beschichtete, schwarze Leder wird zusammen mit einem standardmäßig eingefärbten und beschichteten Stück Leder gleicher Größe in den Laborofen gelegt und auf 80°C aufgewärmt. Die Lederstücke werden aus dem Ofen genommen und der Wärmefluss von der Lederprobe in ein 1 kg schweres Stück Blei bei Raumtemperatur vermessen. Es wird ein Universal Wärmefluss-Sensor F-035-2 mit den Maßen 25 x 25 mm der Firma Wuntronic München eingesetzt. Figur 1 zeigt den Wärmefluss des Leders mit standardmäßiger Ausrüstung (1; Vergleich) und die Kurve (2) zeigt den um ca. 500 W/m² geringeren Wärmefluss der erfindungsgemäß beschichteten Lederprobe. Dieser Unterschied ist auch bei Auflegen der Hand auf die Lederproben deutlich spürbar.

Die spektrale Reflexion der Proben wird im Wellenlängenbereich 400 bis 980 nm vermessen (Messgerät: PC-Einschub-Spektrometer PC 2000 der Fa. Avantes, mit einer spektralen Empfindlichkeit von 320 bis 1 100 nm, mit einer daran angeschlossenen Ulbrichtkugel zur Messung der hemisphärischen Rückstreuung von Oberflächen); die Messergebnisse sind in Figur 2 dargestellt:

Die Kurve (1) zeigt die deutlich höhere Reflexion im nahen Infrarotbereich des erfindungsgemäß beschichteten schwarzen Leders. Die Reflexion des standardmäßigen Vergleichs-Leders (2) liegt auch im nahen Infrarotbereich unter 10 %. Beide schwarzen Lederproben werden auf eine Styroporplatte gelegt und einer ca. 800 W/m² starken Sonneneinstrahlung ausgesetzt. Die Oberflächentemperatur des Standardleders stieg auf 90°C und die des erfindungsgemäßen hingegen nur auf 62°C. Die Dichte des erfindungsgemäß beschichteten Leders liegt bei. 0,85 g/cm³ und die Wärmeleitfähigkeit bei 0,12 W/mK. Die Dichte des standardmäßig beschichteten Leders liegt bei 1,1 g/cm³ und die Wärmeleitfähigkeit bei 0,15 W/mK.
Die Dichte des erfindungsgemäß beschichteten Leders ist damit um 23% und die Wärmeleitfähigkeit um 20% geringer als bei dem standardmäßig beschichteten gemäß Stand der Technik.

### Beispiel 2

### Verringerung der Dichte und der thermischen Leitfähigkeit eines Leders:

Einer Lederprobe wird in ein Wasserbad gelegt. Dem Wasserbad werden 20 Gew.-% bezogen auf das Gewicht des Leders nicht expandierte Mikrohohlkugeln des Typs Expancel 820SL80 der Firma Akzo Nobel zugegeben und über die in einer Gerberei üblichen Prozesse in das Leder eingearbeitet. Danach wird das Leder mit dem Farbstoff Sella Cool Black 10286 der Firma TFL Ledertechnik Basel, schwarz eingefärbt. Das Leder wird bei ca. 100°C solange in einen Ofen gelegt, bis die Mikrohohlkugeln unter der Wärmeeinwirkung expandieren und einen Teil der Hohlräume im Leder ausfüllen.

Ein Stück des so hergestellten, erfindungsgemäßen Leders wird auf eine Heizplatte bei 54°C gelegt und der Wärmeübergang von der Heizplatte über das Leder in einen 1 kg schweren Wasserbecher mit einer Wassertemperatur von 7,5°C mit dem Wärmefluss-Sensor F-035-2 vermessen. Der gleiche Vorgang wird mit einem schwarzen Standardleder durchgeführt (Vergleich).

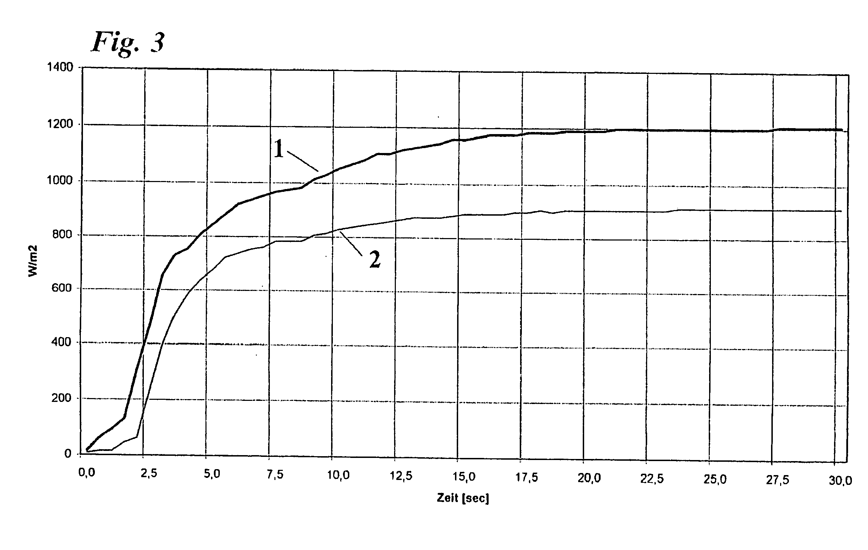

In Figur 3 ist der zeitliche Verlauf des Wärmeflusses durch die Lederproben in W/m² dargestellt. Die Kurve (1) zeigt dabei den Wärmefluss durch das Standardleder (Vergleich). Der Wärmefluss durch die erfindungsgemäß hergestellte schwarze Lederprobe (2) ist dabei ca. 200 W/m² geringer. Die Dichte des erfindungsgemäß bearbeiteten Leders liegt bei 0,85 g/cm³ und die Wärmeleitfähigkeit bei 0,1 W/mK. Die Dichte des standardmäßig hergestellten Leders liegt bei 1,1g/cm³ und die Wärmeleitfähigkeit bei 0,14 W/mK. Die Dichte des erfindungsgemäß bearbeiteten Leders ist damit um 23% und die Wärmeleitfähigkeit um 28% geringer als bei dem standardmäßig hergestellten Vergleichs-Leder.

### Beispiel 3

### Kombination einer gemäß Beispiel 2 hergestellten Lederprobe mit einer gemäß Beispiel 1 hergestellten Beschichtung:

Auf ein gemäß Beispiel 2 hergestelltes Leder wird eine Beschichtung gemäß Beispiel 1 dreimal mit 100 µm Schichtdicke aufgetragen und getrocknet. Das erfindungsgemäße Leder wird auf eine Heizplatte bei 58°C gelegt und der Wärmeübergang von der Heizplatte über das Leder in einen 1 kg schweren Wasserbecher mit einer Wassertemperatur von 0°C (Eiswasser) mit dem Wärmefluss-Sensor F-035-2 vermessen. Der gleiche Vorgang wird mit einem schwarzen, beschichteten Standardleder durchgeführt (Vergleich).

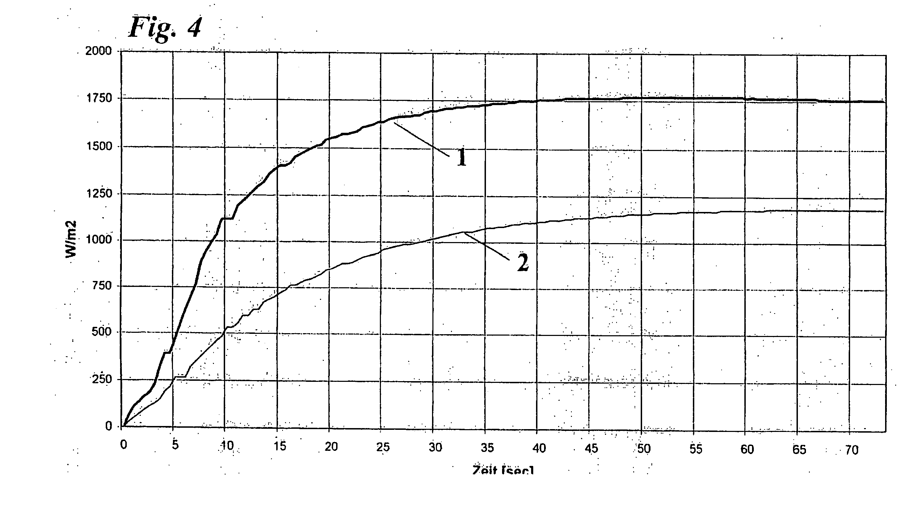

In Figur 4 zeigt die Kurve (1) den Wärmefluss durch das schwarze Standardleder (Vergleich). Der Wärmefluss durch das erfindungsgemäß hergestellte Leder (2) ist deutlich geringer.

Die spektrale Reflexion der beiden schwarzen Lederproben wird, wie in Beispiel 1 beschrieben, vermessen und ist identisch mit den Kurven in Figur 2. Die Kurve (1) in Figur 2 zeigt die spektrale Reflexion des erfindungsgemäß hergestellten Leders und die Kurve (2) die des Standardleders (Vergleich). Die Dichte der erfindungsgemäßen Kombination aus Leder und Beschichtung liegt bei 0,82 g/cm³ und die Wärmeleitfähigkeit bei 0,09 W/mK. Die Dichte des standardmäßig hergestellten Leders liegt bei 1,1 g/cm³ und die Wärmeleitfähigkeit bei 0,15 W/mK. Die Dichte der erfindungsgemäßen Kombination ist damit um 25% und die Wärmeleitfähigkeit um 40% geringer als bei dem standardmäßig hergestellten Vergleichs-Leder.

### Beispiel 4

Polypropylenbauteil mit geringer Wärmeleitfähigkeit und hoher solarer Reflexion:

Zwei Muster für die Innenausstattung eines Pkw auf der Basis von Polypropylen werden nach folgenden Formulierungen hergestellt:
a.)

| | |
|---|---|
| 600,00 g | Polypropylengranulat |
| 040,00 g | SilCell 300 Leichtfüllstoff der Firma Chemco |
| 050,00 g | Hombitan R610K, Titandioxid der Firma Sachtleben |
| 010,00 g | Aerosil TT600 der Firma Degussa |
| 020,00 g | Hostaperm Blau R5R der Firma Clariant |
| 010,00 g | Paliogen Schwarz L0086 der Firma BASF |

Mit einem Laborextruder werden dunkelblaue Musterplatten hergestellt.
b.) 600,00 g Polypropylengranulat

| | |
|---|---|
| 030,00 g | Hombitan R610K, Titandioxid der Firma Sachtleben |
| 010,00 g | Aerosil TT600 der Firma Degussa |
| 020,00 g | Hostaperm Blau R5R der Firma Clariant |
| 010,00 g | Paliogen Schwarz L0086 der Firma BASF |

Die Mischung wird im Extruder mit Kohlendioxidgas geschäumt. Es werden dunkelblaue Musterplatten hergestellt. Die Dichte der Musterplatte a) liegt bei 0,79 g/cm³, die der Musterplatte b) bei 0,74 g/cm³; die Wärmeleitfähigkeit der Musterplatte nach a) liegt bei 0,15 W/mK und die der Musterplatte b) bei 0,13 W/mK. Die Dichte des Standardbauteiles (Vergleich) liegt bei 1,05 g/cm³ und die Wärmeleitfähigkeit bei 0,24 W/mK. Die Dichte der Musterplatte a) liegt damit 25% und die Dichte der Musterplatte b) 29,5% unter der Dichte des Standardbauteiles. Die Wärmeleitfähigkeit der Musterplatte a) liegt 37,5% und die der Musterplatte b) 46% unter der Wärmeleitfähigkeit des Standardbauteiles.
Die spektrale Reflexion der Musterplatten a) und b) und ein Stück eines Standardbauteiles in gleicher dunkelblauer Einfärbung (Vergleich) wird mit dem in Beispiel 1 beschriebenen Spektrometer im Wellenlängenbereich 400 bis 980 nm vermessen.

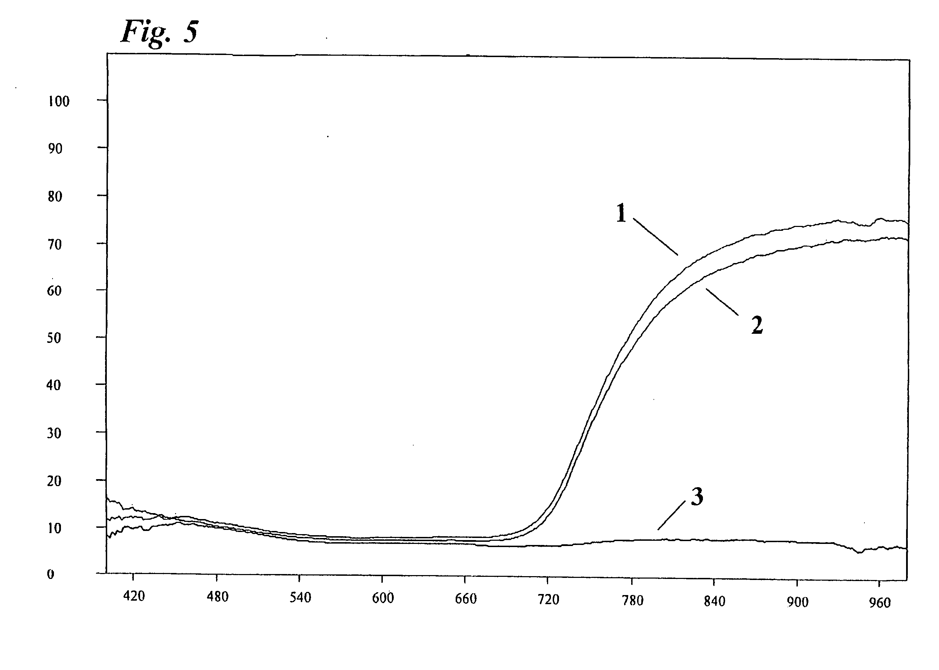

Figur 5 zeigt die Ergebnisse der Messung. Kurve (1) zeigt die Reflexion der Musterplatte a), Kurve (2) die der Musterplatte b) und die Kurve (3) zeigt, dass die Reflexion des Standardbauteiles im Wellenlängenbereich des nahen Infrarots ab 700 nm nur unter 10 % ist. Die Proben werden auf eine Styroporplatte gelegt und 800 W/m² Sonnenstrahlung ausgesetzt. Unter diesen Bedingungen steigt die Oberflächentemperatur der Standardplatte auf 85°C, die Oberflächentemperatur der erfindungsgemäßen Musterplatten liegt bei 60°C.

### Beispiel 5

### Herstellung einer erfindungsgemäßen Musterplatte aus Epoxydharz und Vergleichsbeispiel

Eine dunkel anthrazitfarbene Musterplatte aus Epoxydharz wird nach folgender Formulierung hergestellt (Erfindung):

| | |
|---|---|
| 45,00 g | Epoxydharz L160 Fa. MGS Kunstharzprodukte GmbH, Stuttgart |
| 03,00 g | Leichtfüllstoff Silcell 300 Fa. Chemco Chemieprodukte GmbH |
| 01,00 g | Titandioxid Hombitan R610K Fa. Sachtleben |
| 02,00 g | Paliogen Schwarz L0086 Fa. BASF |
| 15,00 g | H160 Härter Fa. MGS Kunstharzprodukte GmbH, Stuttgart |

Die Musterplatte hatte eine Dichte von 0,8 g/cm³ und die Wärmeleitfähigkeit lag bei 0,2 W/mK.

Als Vergleichsbeispiel wird eine dunkel anthrazitfarbene Epoxydharzplatte mit standardmäßiger Pigmentierung nach folgender Formulierung hergestellt:

| | |
|---|---|
| 45,00 g | Epoxydharz L160 Fa. MGS Kunstharzprodukte GmbH, Stuttgart |
| 05,00 g | handelsüblicher schwarzer Eisenoxid |
| 10,00 g | Talkum der Fa. Wema Nürnberg |
| 00,50 g | Titandioxid Hombitan R610K Fa. Sachtleben |
| 15,00 g | H160 Härter Fa. MGS Kunstharzprodukte GmbH, Stuttgart |

Die Dichte der standardmäßig hergestellten Platte lag bei 1,3 g/cm³ und die Wärmeleitfähigkeit bei 0,3 W/mK. Die Dichte der erfindungsgemäßen Platte ist damit um 38% und die Wärmeleitfähigkeit um 33% geringer als bei der standardmäßig hergestellten Vergleichsplatte.

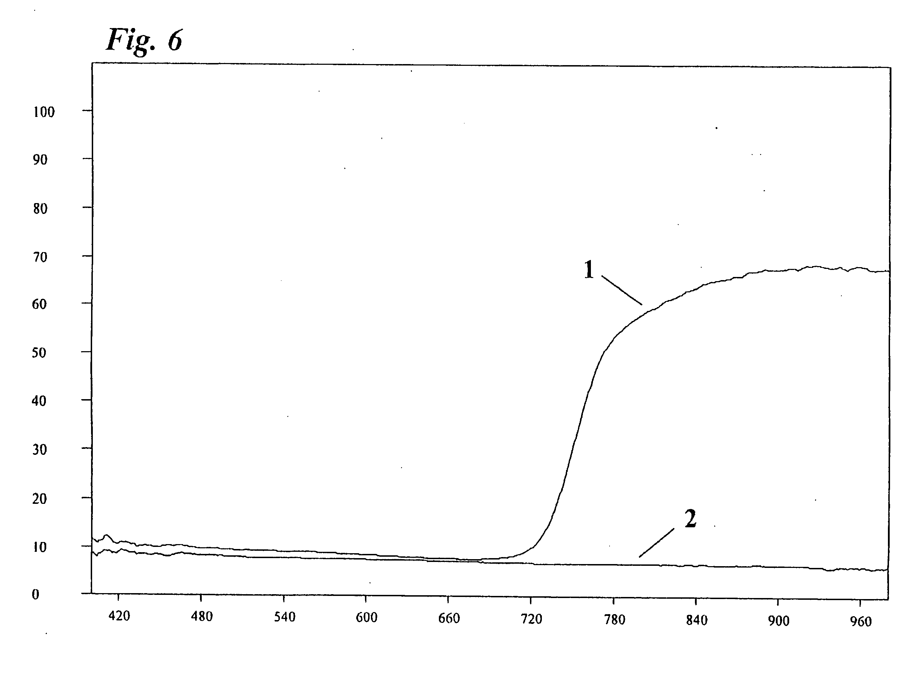

Die spektrale Reflexion der beiden Musterplatten wird mit dem in Beispiel 1 beschriebenen Spektrometer im Wellenlängenbereich 400 bis 980 nm vermessen. In dem Diagramm von Figur 6 zeigt die Kurve (1) die spektrale Reflexion der erfindungsgemäßen Epoxyd Musterplatte und die Kurve (2) die Reflexion der Musterplatte des Vergleichsbeispieles. Die Reflexion der erfindungsgemäßen Musterplatte ist im nahen Infrarotbereich ab 700 nm deutlich höher, was bedeutet, dass sie weniger Sonnenlicht absorbiert, als die im sichtbaren Bereich gleichfarbige Musterplatte des Gegenbeispieles. Die Proben werden auf eine Styroporplatte gelegt und 800 W/m² Sonnenstrahlung ausgesetzt. Unter diesen Bedingungen steigt die Temperatur der erfindungsgemäßen Platte auf nur 60 °C und die des Vergleichsbeispieles auf 85°C.

### Beispiel 6

### Herstellung einer erfindungsgemäßen Folie aus Weich-PVC und Vergleichsbeispiel

Eine schwarze Folie aus Weich-PVC wird nach folgender Rezeptur hergestellt:

| | |
|---|---|
| 200,00 g | handelsübliches PVC mit Weichmacher |
| 012,00 g | Leichtfüllstoff SilCell 300 Fa. Chemco Chemieprodukte GmbH |
| 003,50 g | Titandioxid Hombitan R610K Fa. Sachtleben |
| 007,50 g | Paliogen Schwarz L0086 Fa. BASF |

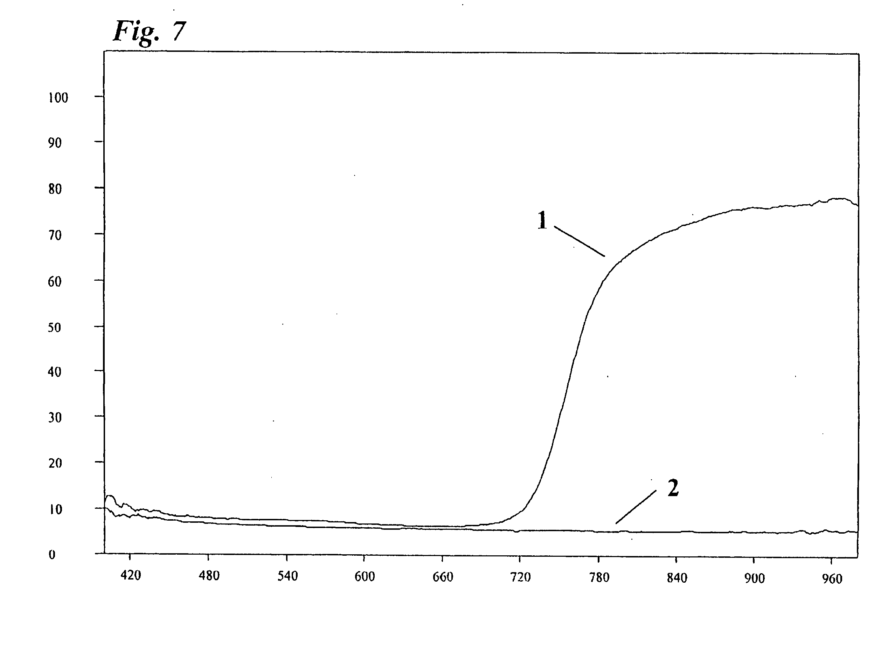

Die Dichte der erfindungsgemäßen PVC-Folie liegt bei 0,95 g/cm³ und die Wärmeleitfähigkeit bei 0,12 W/mK. Die Dichte der handelsüblichen Vergleichs-Folie liegt bei 1,3 *g*/*cm³* und die Wärmeleitfähigkeit bei 0,18 W/mK. Die Dichte der erfindungsgemäßen PVC-Folie ist damit um 27% und die Wärmeleitfähigkeit um 33% geringer als bei der handelsüblichen Vergleichsfolie. Die spektrale Reflexion der PVC-Folie wird mit dem in Beispiel 1 beschriebenen Spektrometer im Wellenlängenbereich 400 bis 980 nm vermessen. Als Vergleichsbeispiel dient eine handelsübliche, schwarze Folie aus Weich-PVC. In Figur 7 sind die Messergebnisse dargestellt. Die Kurve (1) zeigt dabei die im nahen Infrarotbereich erhöhte Reflexion der erfindungsgemäß hergestellten Folie und die Kurve (2) zeigt die Reflexion der handelsüblichen, schwarzen Folie. Die Proben werden auf eine Styroporplatte gelegt und 800 W/m² Sonnenstrahlung ausgesetzt. Unter diesen Bedingungen steigt die Temperatur der handelsüblichen Folie auf 90°C, die der erfindungsgemäßen jedoch nur auf 60°C.

### Beispiel 7

### Herstellung eines doppelseitig beschichteten Textils für einen Lamellenvorhang

Ein Basistextil für die Vorhangserie Plaza^{™} Plus der Firma Hunter Douglas Australien wird auf einer Seite nach folgender Formulierung beschichtet:

### Grundstrich:

| | |
|---|---|
| 70,00 g | Bindemittel Acronal 18D der Fa. BASF |
| 15,00 g | Pigmentpräparation Hostatint Weiß Fa. Hoechst |
| 05,00 g | Leichtfüllstoff Expancel 551WE20 |

nach Abtrocknung wird auf diesen Grundstrich eine anthrazitfarbene Deckschicht aufgetragen die im Farbton der Farbe Ebony der Plaza^{™} Plus der Firma Hunter Douglas nachgestellt ist.

### Deckstrich:

| | |
|---|---|
| 10,00 g | Wasser |
| 10,00 g | Pigmentpräparation Roda Cool Black Fa. TFL Ledertechnik |
| 40,00 g | Bindemittel Acronal 18D der Fa. BASF |
| 05,00 g | Wasser |
| 01,00 g | Hostatint Weiß Fa. Hoechst |

Die Rückseite des Textils wird zweimal mit dem weißen Grundstrich beschichtet.

Die Dichte des erfindungsgemäß ausgeführten Textils liegt bei 1,1 g/cm³ und die thermische Leitfähigkeit bei 0,15 W/mK. Die Dichte des handelsüblichen Gegenbeispieles liegt bei 1,3 g/cm³ und die Wärmeleitfähigkeit bei 0,22 W/mK.

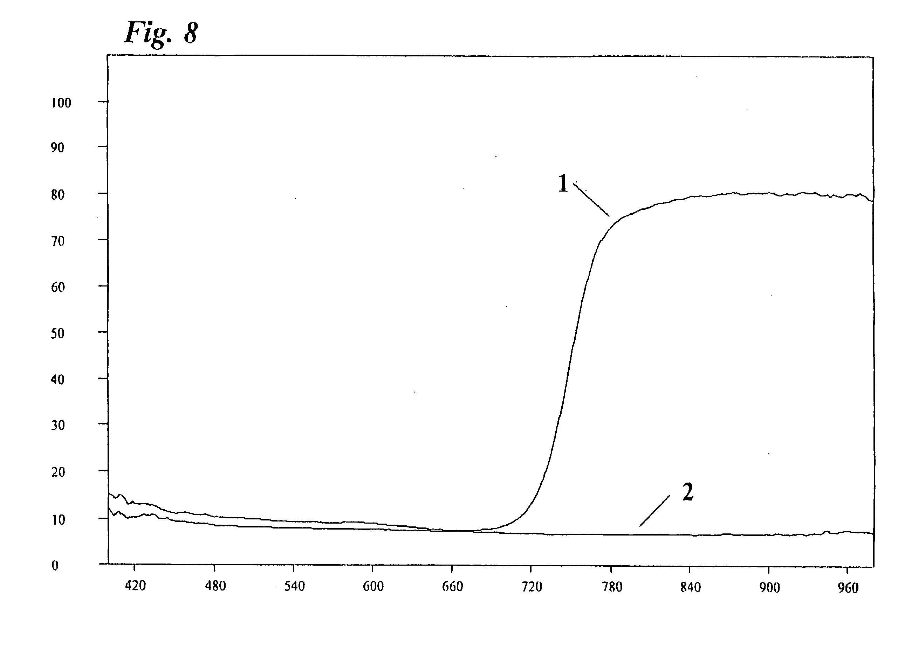

Die Dichte der erfindungsgemäß ausgeführten Textils ist damit um 15% und die Wärmeleitfähigkeit um 32% geringer als bei dem handelsüblichen Gegenbeispiel. Die spektrale Reflexion der anthrazit beschichteten Frontseite des Textils wird mit dem in Beispiel 1 beschriebenen Spektrometer im Wellenlängenbereich 400 bis 980 nm vermessen. In Figur 8 zeigt die Kurve (1) die spektral Reflexion des erfindungsgemäß hergestellten Textils und die Kurve (2) die Reflexion des Original Vorhangstoffes Ebony aus Vorhangserie Plaza^{™} Plus der Firma Hunter Douglas Australien. Die Reflexion liegt hier wie im sichtbaren Bereich unter 10%. Die Proben wurden auf eine Styroporplatte gelegt und 900 W/m² Sonnenstrahlung ausgesetzt. Unter diesen Bedingungen erwärmt sich die Frontseite des Vergleichs-Vorhangstoff auf 90°C, der erfindungsgemäße dagegen nur auf 52°C. Beim Einsatz des erfindungsgemäßen Materials als Lamellenvorhang ist unter folgenden Bedingungen:
Sonneneinstrahlung 900 W/m²
Außentemperatur 25°C
Raumtemperatur 21°C,
der Wärmefluss durch den Vorhang in einen Raum 30% geringer als beim Vergleichsmaterial.

### Beispiel 8

### Herstellung einer Musterplatte für PVC Fensterprofile mit dunkler Oberfläche

Einem handelsüblichen, weiß eingefärbten PVC Granulat für die Herstellung von Fensterprofilen werden 20 Gew.-% Mikrohohlkugeln des Typs S38HS der Firma 3M hinzu gegeben. Im Laborextruder wird eine Musterplatte mit 5 mm Dicke erstellt. Weiterhin wird einem handelsüblichen klaren PVC Granulat für die Herstellung von PVC Folien 3 Gew.-% bezogen auf die Menge an PVC Granulat Hostaperm Blau R5R der Firma Clariant und 1,5 Gew.-% Paliogen Schwarz L0086 der Firma BASF hinzu gegeben und im Laborextruder aufgeschmolzen und gemischt. Es wird eine dunkelblaue Folie mit 300 µm Dicke hergestellt. Die Folie wird mit einem klaren Heißkleber auf die weiße PVC Platte unter Druck verklebt.

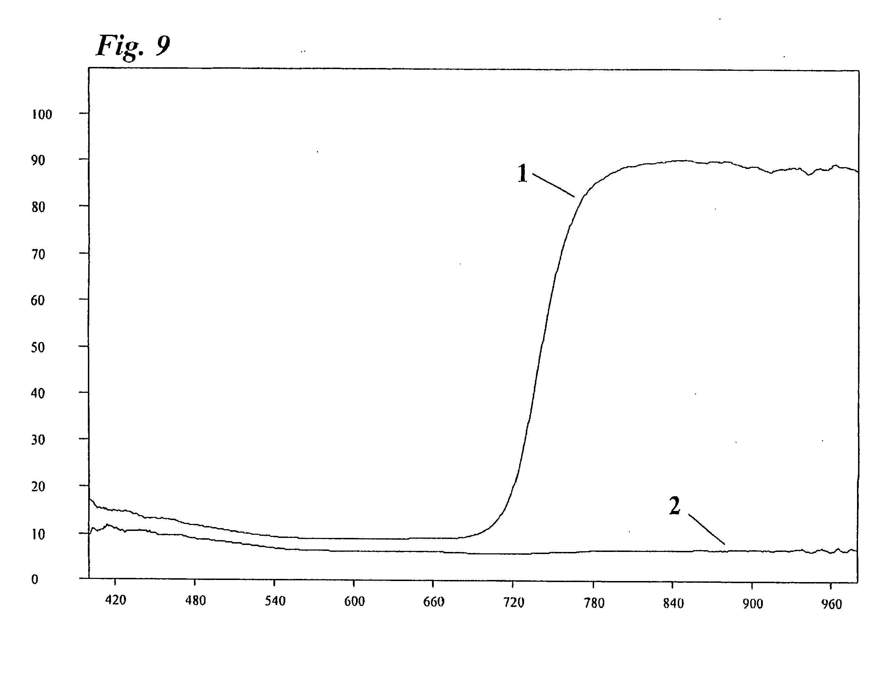

Die Dichte des dunkelblauen Versuchsmusters für Fensterprofile (Erfindung) liegt bei 1,18 g/cm³ und die Wärmeleitfähigkeit bei 0,14 W/mK. Die Dichte eines handelsüblichen PVC Fensterprofiles (Vergleich) liegt bei 1,6 g/cm³ und die Wärmeleitfähigkeit bei 0,2 W/mK. Die Dichte des erfindungsgemäßen Versuchsmusters ist damit um 26% und die Wärmeleitfähigkeit um 30% geringer als bei dem handelsüblichen Vergleichsprofil. Die spektrale Reflexion der Platte wird mit dem in Beispiel 1 beschriebenen Spektrometer im Wellenlängenbereich 400 bis 980 nm vermessen und einem handelsüblichen Teil eines dunkelblau gefärbten Fensterprofils gegenübergestellt. Die Messergebnisse sind in Figur 9 dargestellt. Dabei zeigt die Kurve (1) die deutlich höhere Reflexion im nahen Infrarot des erfindungsgemäß hergestellten Musters eines PVC Fensterprofils. Beim handelsüblichen, dunkelblauen Teil eines PVC Fensterprofils bleibt die Reflexion im nahen IR unter 10 %. Die Platten wurden 900 W/m² Sonnenlicht ausgesetzt. Die Oberfläche der handelsüblichen Platte erreichte eine Temperatur von 90°C und verformte sich leicht. Die Oberflächentemperatur der erfindungsgemäßen Platte lag bei nur 60°C und es war keine Verformung feststellbar. Beim Einsatz des erfindungsgemäßen PVC Fensterprofils ist unter folgenden Bedingungen:
Sonneneinstrahlung 900 W/m²
Außentemperatur 25°C
Raumtemperatur 21°C,
der Wärmefluss durch den Fensterrahmen in einen Raum 35% geringer als bei dem Standardmaterial.

### Beispiel 9

### Herstellung eines braun kolorierten Betondachziegels mit geringer Wärmeleitfähigkeit

Es wird eine Musterplatte eines Betondachziegels nach folgender Formulierung hergestellt (Erfindung):

| | |
|---|---|
| 35,00 g | Portlandzement der Firma Lugato |
| 05,00 g | Titandioxid Rutil Hombitan R210 Firma Sachtleben |
| 10,00 g | Leichtfüllstoff SilCell 300 der Firma Chemco |

Der Mischung wird Wasser hinzu gegeben, bis eine fließfähige Konsistenz erreicht wird, dann wird die Mischung in eine Form gegeben und im Ofen getrocknet.

Die trockene Betondachplatte wird mit einer dunklen rotbraunen Beschichtung nach folgender Rezeptur versehen:

| | |
|---|---|
| 140,00 g | Acronal 18D der Firma BASF |
| 010,00 g | Langdopec Rot 30000 der Firma SLMC |
| 010,00 g | Ferro PK 4047 Grün der Firma Ferro |
| 007,50 g | Sylowhite SM 405 der Firma Grace |
| 000,60 g | Entschäumer Byk 024 der Firma Byk |
| 000,60 g | Pigmentverteiler N der Firma BASF |
| 000,40 g | Verdicker Acrysol TT 615 der Firma Rohm and Haas |
| 015,00 g | Wasser |

Die spektrale Reflexion der dunkel-rotbraunen Betondachplatte wird mit dem in Beispiel 1 beschriebenen Spektrometer im Wellenlängenbereich 400 bis 980 nm vermessen. Als Vergleichsbeispiel dient eine handelsübliche Betondachplatte im Farbton Dunkelbraun CC021 der Firma Kubota in Japan.

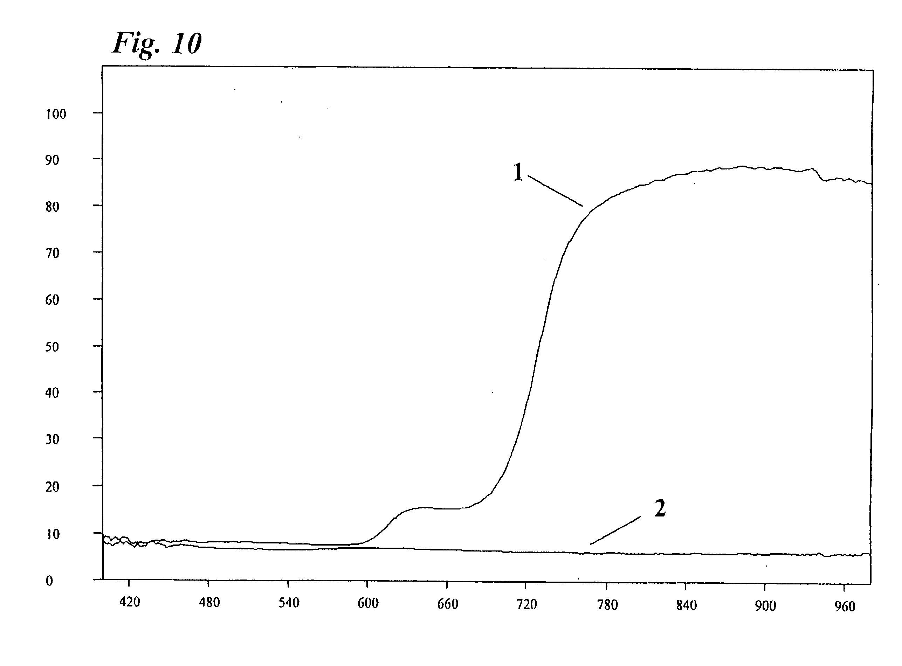

In Figur 10 sind die Messergebnisse dargestellt. Dabei zeigt die Kurve (1) die deutliche Erhöhung der Reflexion im Nahen Infrarot der erfindungsgemäß hergestellten Betondachplatte und die Kurve (2) zeigt das die Reflexion der handelsüblichen Betondachplatte im nahen IR noch etwas geringer ist als im sichtbaren Wellenlängenbereich.

Bei der Aufheizung der Dachplatten und 850 W/m² Sonnenlicht erwärmt sich die Oberfläche der handelsüblichen Betondachplatte auf 87°C und die der erfindungsgemäßen nur auf 51°C. Die Dichte der erfindungsgemäßen Dachplatte liegt bei 0,7 g/cm³ und die Wärmeleitfähigkeit bei 0,16 W/mK. Die Dichte der handelsüblichen Betondachplatte liegt bei 1,6 g/cm³ und die Wärmeleitfähigkeit bei 0,87 W/mK. Die Dichte der erfindungsgemäßen Dachplatte ist damit um 56% und die Wärmeleitfähigkeit um 82% geringer als bei der handelsüblichen Betondachplatte.
Beim Einsatz der erfindungsgemäßen Betondachplatte ist unter folgenden Bedingungen:

| | |
|---|---|
| Sonneneinstrahlung | 850 W/m² |
| Außentemperatur | 25°C |
| Raumtemperatur | 21°C, |

der Wärmefluss durch ein Dach in den Dachraum 45% geringer als bei dem Standardmaterial

### Beispiel 10

### Kombination eines Außenputzes mit einer solar reflektierenden Außenwandfarbe

Eine 2 cm dicke Platte, hergestellt aus einem Außenputz der Firma Colfirmit Rajasil mit der Bezeichnung "Ultraleichtputz" wird mit einer hellgrauen Außenwandfarbe nach folgender Formulierung beschichtet.
200,00 g Acrylor FS Weiß der Firma Relius Coatings
010,00 g Pigmentpräparation Roda Cool Black der Fa. TFL Ledertechnik

Zum Vergleich wird eine Außenwandfarbe der Firma Sonneborn USA im Farbton Drumhill Grey 458-M auf eine 2 cm dicke Platte aus handelsüblichem Putz aufgetragen.

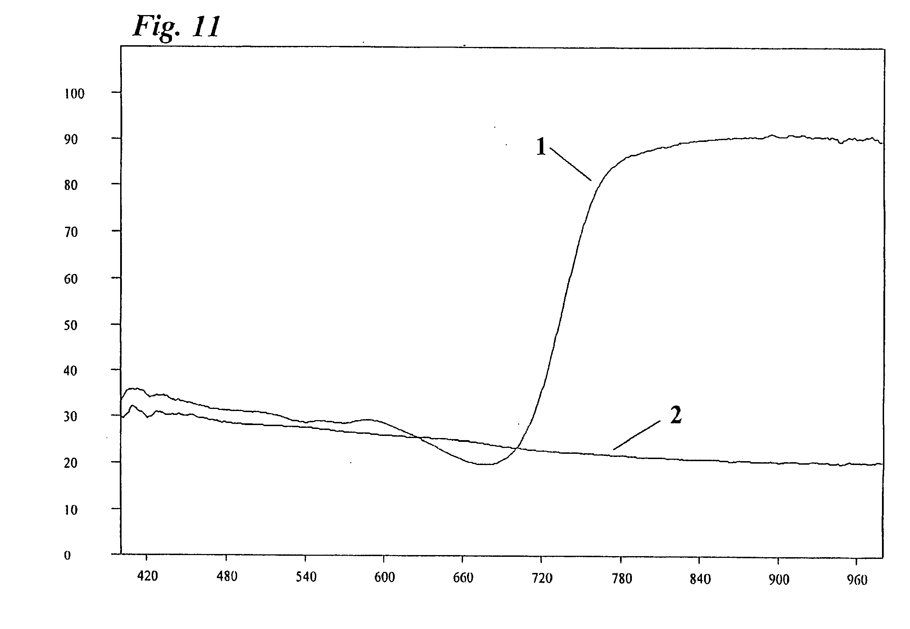

Die spektrale Reflexion beider Putzplatten wird mit dem in Beispiel 1 beschriebenen Spektrometer im Wellenlängenbereich 400 bis 980 nm vermessen. Die Messergebnisse sind in Figur 11 dargestellt. Dabei zeigt die Kurve (1), dass die Reflexion der erfindungsgemäß hergestellten Kombination eines Außenputzes mit einer solar reflektierenden Außenwandfarbe im nahen Infrarotbereich höher ist, als die Reflexion im nahen IR der standardmäßig beschichteten Putzplatte, dargestellt durch die Kurve (2).

Die Gesamtdichte der erfindungsgemäßen Kombination liegt bei 0,9 g/cm³. Die Gesamtdichte der standardgemäßen Kombination liegt bei 2,2 g/cm³. Die Wärmeleitfähigkeit der erfindungsgemäßen Kombination eines Leichtputzes mit einer solar reflektierenden Farbe liegt bei 0,12 W/mK, die der standardmäßigen Kombination bei 0,87 W/mK. Die Gesamtdichte der erfindungsgemäßen Kombination ist damit um 59% und die Wärmeleitfähigkeit um 86% geringer als bei dem standardmäßigen Kombination.

Beim Einsatz der erfindungsgemäßen Kombination auf einer 20 cm starken Betonwand ist unter folgenden Bedingungen:

| | |
|---|---|
| Sonneneinstrahlung | 800 W/m² |
| Außentemperatur | 25°C |
| Raumtemperatur | 21°C, |

der Wärmefluss durch die Wand in das Haus 42% geringer als bei dem Standardmaterial.

## Patentansprüche

1. Dunkles, flächiges Element mit geringer Wärmeleitfähigkeit, verringerter Dichte und niedriger solarer Absorption, **dadurch gekennzeichnet, dass**
a) es mindestens eine Kombination aus einem Trägermaterial mit darin eingelagerten Komponenten aufweist, wobei
b) die Kombination a) eine Wärmeleitfähigkeit kleiner 0.4 [W/m·K] hat und
c) eine Rohdichte, die unter 1,4 g/cm³ liegt
d) das Element eine mittlere Reflexion im Wellenlängenbereich des sichtbaren Lichtes von 400 bis 700 nm hat, die kleiner 50% ist und
e) das Element eine mittlere Reflexion im Wellenlängenbereich des nahen Infrarot von 700 bis 1000 nm hat, die größer 50% ist.

2. Element nach Anspruch 1, **dadurch gekennzeichnet, dass** das Trägermaterial ein Kunststoff, eine Lackschicht, ein Fasermaterial, eine hydraulisch abbindende Masse und/oder ein Verbundmaterial ist.

3. Element nach Anspruch 2, **dadurch gekennzeichnet, dass** der Kunststoff, ausgewählt ist aus der Reihe der Polyamide, Polyacetate, Polyester, Polycarbonate, Polyolefine, der Styrolpolymere, der Schwefelpolymere, der Fluorkunststoffe, der Polyimide, Polymethylmethacrylate (PMMA). Polyvinylchlorid, der Silikone, der Epoxydharze, der Polymer-Blends, Polycarbonat - Acrylnitril-Butadien-Styrol (ABS) sowie der Melamin-, Phenolharze und Polyurethane und deren geeignete Mischungen.

4. Element nach einem der Ansprüche 2 oder 3, **dadurch gekennzeichnet, dass** das Trägermaterial sowohl ein reaktiv vernetzender Kunststoff wie auch ein thermoplastischer Kunststoff sein kann.

5. Element nach Anspruch 2, **dadurch gekennzeichnet, dass** die Lackschicht aus einem Bindemittel gebildet ist, das ausgewählt ist aus der Reihe der wasserlöslichen Binder aus Alkyden, Polyester, Polyacrylate, Epoxyde und Epoxydester, der wässrigen Dispersionen und Emulsionen, auf der Basis von Acrylaten, Styrol-Acrylaten, Ethylen-Acrylsäure-Copolymeren, Methacrylaten, Vinylpyrrolidon-Vinylacetat-Copolymeren, Polyvinylpyrrolidon, Polyisopropylacrylat, Polyurethan, Silikon und Polyvinylacetaten, der Wachsdispersionen, auf Basis von Polyethylen, Polypropylen, Polytetrafluorethylen (Teflon^{®}) synthetische Wachse, fluorierte Polymere, fluoriertes Acryl-Copolymer in wässriger Lösung, Fluorsilikone, und der terminal und/oder lateral und/oder intrachenar fluormodifizierten Polyurethanharze, Polyurethan-Dispersionen und Polyurethan-Polymer-Hybrid-Dispersionen und Mischungen aus diesen.

6. Element nach Anspruch 2, **dadurch gekennzeichnet, dass** die Lackschicht gebildet ist, aus einem Bindemittel, das ausgewählt ist aus der Reihe der lösemittelhaltigen Bindemittel, auf der Basis von Acrylaten Styrol-Acrylaten Polyvinyl, Polyvinylchlorid, Polystyrene und Styrene Copolymeren, Alkydharzen, gesättigten und ungesättigten Polyesteren, Hydroxid-funktionalen Polyestern, Melamin-Formaldehyd-Harzen, Polyisocyanat-Harzen, Polyurethanen, Epoxydharzen, Fluorpolymeren und Silikonen, chlorsulfoniertem Polyäthylen, fluorierten Polymeren, fluorierterem Acryl-Copolymer, Fluorsilikonen, Plastisolen, Polyvinyldifluorid (PVDF), und der terminal und/oder lateral und/oder intrachenar fluormodifizierten Polyurethanharzen, Polyurethan-Dispersionen und Polyurethan-Polymer-Hybrid-Dispersionen und Mischungen aus diesen.

7. Element nach einem der Ansprüche 5 oder 6, **dadurch gekennzeichnet, dass** es sich bei den terminal und lateral und/oder intrachenar fluormodifizierten Polyurethanharzen um fluormodifizierte Polymere handelt, die endständig und/oder seitenständig und/oder in der Hauptkette polymere Strukturelemente auf Basis von Perfluoralkyl(en)- und/oder Polyhexafluorpropenoxid-Gruppen enthalten.

8. Element nach Anspruch 2, **dadurch gekennzeichnet, dass** das Fasermaterial Leder aus tierischen Häuten ist.

9. Element nach Anspruch 2, **dadurch gekennzeichnet, dass** es sich bei der hydraulisch abbindenden Masse um eine Mischung auf Basis von Zement, Calciumsulfat oder Anhydrid handelt.

10. Element nach Anspruch 2, **dadurch gekennzeichnet, dass** das Verbundmaterial synthetische Fasern enthält aus Kunststoffen und/oder keramischen Stoffen und/oder natürliche Fasern aus Wolle, Baumwolle, Sisal, Hanf und Zellulose.

11. Element nach einem der Ansprüche 1 bis 10, **dadurch gekennzeichnet, dass** die in das Trägermaterial eingelagerten Komponenten aus folgenden Gruppen ausgewählt werden:
a) anorganische und/oder organische Leichtfüllstoffe, die vorzugsweise die Dichte und die Wärmeleitfähigkeit des Trägermateriales herabsetzen,
b) Gase, die im Trägermaterial Hohlräume bilden und die Dichte und die Wärmeleitfähigkeit des Trägermateriales herabsetzen und
c) Farbstoffe, die im Wellenlängenbereich des sichtbaren Lichtes von 400 bis 700 nm spektralselektiv reflektieren und im Wellenlängenbereich des nahen Infrarot von 700 bis 1000 nm eine mittlere Transparenz von größer 50% aufweisen und/oder
d) erste Pigmente, die im Wellenlängenbereich des sichtbaren Lichtes von 400 bis 700 nm spektralselektiv reflektieren und im Wellenlängenbereich des nahen Infrarot von 700 bis 1000 nm eine mittlere Transparenz von größer 50% aufweisen und/oder
e) zweite Pigmente, die im Wellenlängenbereich des sichtbaren Lichtes von 400 bis 700 nm spektralselektiv reflektieren und im Wellenlängenbereich des nahen Infrarot von 700 bis 1000 nm eine mittlere Reflexion von größer 50% aufweisen,
f) anorganische und/oder organische Nanomaterialien, die oberflächenbehandelt oder oberflächenbeschichtet sein können

12. Element nach Anspruch 11, **dadurch gekennzeichnet, dass** es sich bei den Leichtfüllstoffen um solche handelt, deren Dichte unter 0,5 g/cm³ liegt.

13. Element nach einem der Ansprüche 11 oder 12, **dadurch gekennzeichnet, dass** es sich um Mikrohohlkugeln aus einem keramischen Material, aus Glas oder aus einem Kunststoff, handelt, wobei die Dichte der Mikrohohlkugeln aus Glas oder einem anderen keramischen Material unter 0,4 g/cm³ liegt und die Dichte der Mikrohohlkugeln aus einem Kunststoff unter 0.2 g/cm³.

14. Element nach einem der Ansprüche 11 bis 13, **dadurch gekennzeichnet, dass** es sich bei den Leichtfullstoffen um Kunststoffteilchen handelt, die erst bei Aufheizen des Trägermateriales auf Temperaturen von 80 bis 160°C Mikrohohlkugeln mit einer Dichte unter 0,2 g/cm³ ausbilden.

15. Element nach Anspruch 11, **dadurch gekennzeichnet, dass** es sich bei den Farbstoffen um wasserlösliche Farbstoffe handelt, ausgewählt aus sauren Farbstoffen, substantiven Farbstoffen, basischen Farbstoffen, Entwicklungsfarbstoffen, Schwefelfarbstoffen und Anilinfarbstoffen, oder Farbstoffe ausgewählt aus der Gruppe der Farbstoffe, die mit Lösemitteln anlöst werden, ausgewählt aus Zaponfarbstoffen.

16. Element nach Anspruch 11, **dadurch gekennzeichnet**, das die ersten Pigmente ausgewählt werden aus Monoazo-, Disazo-, α-Naphthol-, Naphthol-AS-, verlackte Azo-Benzimidazolon-, Disazokondensations-, Metallkomplex-, Isoindolinon- und Isoindolin-Pigmente, Phthalocyanin-, Chinacridon-, Perylen- und Perinon-, Thioindigo-, Anthrachinon-, Anthrapyrimidin-, Flavanthron-, Pyranthron-, Indanthron-, Anthanthron-, Dioxazin-, Triarylcarbonium-, Chino-phthalon-, Diketo-pyrrolo-pyrrol-Pigmente.

17. Element nach Anspruch 11, **dadurch gekennzeichnet, dass** es sich bei den zweiten Pigmenten zum anorganische Pigmente handelt, ausgewählt aus der Reihe der Metalloxide und -Hydroxide aus Cadmium-, Wismut-, Chrom-, Ultramarinpigmente, der beschichteten, plättchenförmigen Glimmerpigmente und der Rutil- und Spinellmischphasenpigmente.

18. Element nach einem der Ansprüche 1 bis 17, **dadurch gekennzeichnet, dass** in das Trägermaterial weitere Teilchen eingebracht werden, die im Wellenlängenbereich von 400 bis 1 000 nm eine Reflexion größer 70 % aufweisen.

19. Element nach Anspruch 18, **dadurch gekennzeichnet, dass** die weiteren Teilchen ausgewählt sind aus der Gruppe der anorganischen Pigmente, aus der Gruppe der Metalloxide, der Metallsulfate, der Metallsulfide, der Metallfluoride, der Metallsilikate, der Metallcarbonate sowie Mischungen aus diesen.

20. Element nach einem der Ansprüche 18 oder 19, **dadurch gekennzeichnet, dass** die weiteren Teilchen ausgewählt sind aus der Gruppe der abbaubaren Materialien ausgewählt aus Calciumcarbonat, aus Magnesiumcarbonat, aus Talkum, aus Zirkonsilikat, aus Zirkonoxid, aus Aluminiumoxid, aus natürlichem Bariumsulfat und Mischungen aus diesen.

21. Element nach einem der Ansprüche 1 bis 20, **dadurch gekennzeichnet, dass** die Wärmeleitfähigkeit des Elements kleiner 0.3 [W/m·K] und besonders bevorzugt kleiner 0.2 [W/m.K] ist.

22. Element nach einem der Ansprüche 1 bis 21, **dadurch gekennzeichnet, dass** die Rohdichte des Elements unter 1,2 g/cm³ und besonders bevorzugt unter 1,0 g/cm³ liegt.

23. Element nach einem der Ansprüche 1 bis 22, **dadurch gekennzeichnet, dass** es eine mittlere Reflexion im Wellenlängenbereich des sichtbaren Lichtes von 400 bis 700 nm hat, die kleiner 40% ist.

24. Element nach einem der Ansprüche 1 bis 23, **dadurch gekennzeichnet, dass** es eine mittlere Reflexion im Wellenlängenbereich des nahen Infrarot von 700 bis 1000 nm hat, die größer 60% ist.

25. Element nach einem der Ansprüche 1 bis 24, **dadurch gekennzeichnet, dass** die Leichtfüllstoffe die Reflexion des Elements im nahen Infrarotbereich von 700 bis 1000 nm um bis zu 10% erhöhen.

26. Element nach einem der Ansprüche 1 bis 25, **dadurch gekennzeichnet, dass** die Kombination a) zusätzlich die Merkmale d) und/oder e) des Elements besitzt.

27. Element nach einem der Ansprüche 1 bis 26, **dadurch gekennzeichnet, dass** es sich aus mindestens zwei Schichten zusammensetzt, wobei mindestens eine Schicht aus der Kombination a) besteht.

28. Element nach einem der Ansprüche 1 bis 27, **dadurch gekennzeichnet, dass** die Kombination a) mit einer Schicht aus Trägermaterial kombiniert ist, die keine eingelagerten Komponenten enthält.

29. Element nach einem der Ansprüche 1 bis 28, **dadurch gekennzeichnet, dass** gleiche oder verschiedene Ausführungsformen des Elements in mindestens zwei Schichten übereinander kombinierbar sind.

30. Element nach einem der Ansprüche 1 bis 29, **dadurch gekennzeichnet, dass** es mit einer zusätzlichen Lackschicht versehen ist, bei der es sich vorzugsweise um eine transparente Lackschicht handelt.

31. Element nach einem der Ansprüche 1 bis 30, **dadurch gekennzeichnet, dass** es mit einem tragenden Untergrund in Form einer Anordnung, Vorrichtung oder einer Schicht kombiniert ist.

32. Element nach einem der Ansprüche 1 bis 31, **dadurch gekennzeichnet, dass** es eine selbst tragende Anordnung darstellt.

## Claims

1. Dark, flat element having low thermal conductivity, reduced density and low solar absorption, **characterised in that**
a) it has at least a combination comprising a support material with components incorporated therein, wherein
b) the combination a) has a thermal conductivity of less than 0.4 [W/m· K] and
c) a bulk density which is below 1.4 g/cm³
d) the element has an average reflection in the wavelength range of visible light from 400 to 700 nm which is less than 50% and
e) the element has an average reflection in the wavelength range of near infrared from 700 to 1,000 nm which is greater than 50%.

2. Element according to claim 1, **characterised in that** the support material is a plastic, a lacquer layer, a fibrous material, a hydraulically setting composition and/or a composite material.

3. Element according to claim 2, **characterised in that** the plastic is selected from the series comprising polyamides, polyacetates, polyesters, polycarbonates, polyolefins, styrene polymers, sulphur polymers, fluoroplastics, polyimides, polymethylmethacrylates (PMMA), polyvinyl chloride, silicones, epoxy resins, polymer blends, polycarbonate - acrylonitrile-butadiene-styrene (ABS) and melamine resins, phenol resins and polyurethanes and suitable mixtures thereof.

4. Element according to one of claims 2 or 3, **characterised in that** the support material may be both a reactively crosslinking plastic and a thermoplastic material.

5. Element according to claim 2, **characterised in that** the lacquer layer is formed from a binder which is selected from the series comprising water-soluble binders comprising alkyds, polyesters, polyacrylates, epoxides and epoxy esters, aqueous dispersions and emulsions, based on acrylates, styrene acrylates, ethylene-acrylic acid copolymers, methacrylates, vinylpyrrolidone-vinyl acetate copolymers, polyvinylpyrrolidone, polyisopropyl acrylate, polyurethane, silicone and polyvinyl acetates, wax dispersions, based on polyethylene, polypropylene, polytetrafluoroethylene (Teflon), synthetic waxes, fluorinated polymers, fluorinated acrylic copolymers in aqueous solution, fluorosilicones, and terminally and/or laterally and/or intrachenarly fluoromodified polyurethane resins, polyurethane dispersions and polyurethane polymer hybrid dispersions and mixtures of the latter.

6. Element according to claim 2, **characterised in that** the lacquer layer is formed from a binder which is selected from the series comprising solvent-containing binders, based on acrylates, styrene acrylates, polyvinyl, polyvinyl chloride, polystyrenes and styrenes, copolymers, alkyd resins, saturated and unsaturated polyesters, hydroxide-functional polyesters, melamine-formaldehyde resins, polyisocyanate resins, polyurethanes, epoxy resins, fluoropolymers and silicones, chlorosulphonated polyethylene, fluorinated polymers, fluorinated acrylic copolymers, fluorosilicones, plastisols, polyvinyl difluoride (PVDF), and terminally and/or laterally and/or intrachenarly fluoromodified polyurethane resins, polyurethane dispersions and polyurethane polymer hybrid dispersions and mixtures of the latter.

7. Element according to one of claims 5 or 6, **characterised in that** the terminally and laterally and/or intrachenarly fluoromodified polyurethane resins are fluoromodified polymers which contain terminal and/or lateral and/or in the main chain polymer structural elements based on perfluoroalkyl(ene) and/or polyhexafluoropropene oxide groups.

8. Element according to claim 2, **characterised in that** the fibrous material is leather made from animal skins.

9. Element according to claim 2, **characterised in that** the hydraulically setting composition is a mixture based on cement, calcium sulphate or anhydrite.

10. Element according to claim 2, **characterised in that** the composite material contains synthetic fibres made from plastics and/or ceramic materials, and/or natural fibres made from wool, cotton, sisal, hemp and cellulose.

11. Element according to one of claims 1 to 10, **characterised in that** the components incorporated in the support material are selected from the following groups:
a) inorganic and/or organic light-weight fillers which preferably reduce the density and the thermal conductivity of the support material,
b) gases which form cavities in the support material and reduce the density and the thermal conductivity of the support material and
c) dyestuffs which reflect spectro-selectively in the wavelength range of visible light from 400 to 700 nm and in the wavelength range of near infrared from 700 to 1,000 nm have an average transparency of greater than 50% and/or
d) first pigments which reflect spectro-selectively in the wavelength range of visible light from 400 to 700 nm and in the wavelength range of near infrared from 700 to 1,000 nm have an average transparency of greater than 50% and/or
e) second pigments which reflect spectro-selectively in the wavelength range of visible light from 400 to 700 nm and in the wavelength range of near infrared from 700 to 1,000 nm have an average reflection of greater than 50%,
f) inorganic and/or organic nanomaterials which may be surface-treated or surface-coated.

12. Element according to claim 11, **characterised in that** the light-weight fillers are those, the density of which is below 0.5 g/cm³.

13. Element according to one of claims 11 or 12, **characterised in that** they are microspheres made from a ceramic material, from glass or from a plastic, wherein the density of the microspheres made from glass or a further ceramic material is below 0.4 g/cm³ and the density of the microspheres made from a plastic below 0.2 g/cm³.

14. Element according to one of claims 11 to 13, **characterised in that** the light-weight fillers are plastic particles which form microspheres having a density below 0.2 g/cm³ only when heating the support material to temperatures from 80 to 160°C.

15. Element according to claim 11, **characterised in that** the dyestuffs are water-soluble dyestuffs selected from acid dyestuffs, substantive dyestuffs, basic dyestuffs, developed dyestuffs, sulphur dyestuffs and aniline dyestuffs, or dyestuffs selected from the group comprising dyestuffs which are dissolved using solvents selected from zapon dyestuffs.

16. Element according to claim 11, **characterised in that** the first pigments are selected from monoazo, diazo, α-naphthol, naphthol-AS, lacquered azo-benzimidazolone, diazo condensation, metal complex, isoindolinone and isoindoline pigments, phthalocyanine, quinacridone, perylene and perinone, thioindigo, anthraquinone, anthrapyrimidine, flavanthrone, pyranthrone, indanthrone, anthanthrone, dioxazine, triarylcarbonium, quino-phthalone, diketo-pyrrolo-pyrrole pigments.

17. Element according to claim 11, **characterised in that** the second pigments are inorganic pigments selected from the series comprising metal oxides and metal hydroxides, from cadmium, bismuth, chromium, ultramarine pigments, coated lamellar mica pigments and rutile and spinel mixed-phase pigments.

18. Element according to one of claims 1 to 17, **characterised in that** further particles, which have a reflection greater than 70% in the wavelength range from 400 to 1,000 nm, are introduced into the support material.

19. Element according to claim 18, **characterised in that** the further particles are selected from the group comprising inorganic pigments, from the group of metal oxides, metal sulphates, metal sulphides, metal fluorides, metal silicates, metal carbonates and mixtures of the latter.

20. Element according to one of claims 18 or 19, **characterised in that** the further particles are selected from the group comprising degradable materials selected from calcium carbonate, from magnesium carbonate, from talcum powder, from zirconium silicate, from zirconium oxide, from aluminium oxide, from natural barium sulphate and mixtures of the latter.

21. Element according to one of claims 1 to 20, **characterised in that** the thermal conductivity of the element is less than 0.3 [W/m.K] and particularly preferably less than 0.2 [W/m.K] .

22. Element according to one of claims 1 to 21, **characterised in that** the bulk density of the element is below 1.2 g/cm³ and particularly preferably below 1.0g/cm³.

23. Element according to one of claims 1 to 22, **characterised in that** it has an average reflection in the wavelength range of visible light from 400 to 700 nm which is less than 40%.

24. Element according to one of claims 1 to 23, **characterised in that** it has an average reflection in the wavelength range of near infrared from 700 to 1,000 nm which is greater than 60%.

25. Element according to one of claims 1 to 24, **characterised in that** the light-weight fillers increase the reflection of the element in the near infrared range from 700 to 1,000 nm by up to 10%.

26. Element according to one of claims 1 to 25, **characterised in that** the combination a) additionally has the features d) and/or e) of the element.

27. Element according to one of claims 1 to 26, **characterised in that** it is composed of at least two layers, wherein at least one layer consists of the combination a).

28. Element according to one of claims 1 to 27, **characterised in that** the combination a) is combined with a layer of support material which does not contain incorporated components.

29. Element according to one of claims 1 to 28, **characterised in that** the same or different embodiments of the element can be combined in at least two layers one above another.

30. Element according to one of claims 1 to 29, **characterised in that** it is provided with an additional lacquer layer, which is preferably a transparent lacquer layer.

31. Element according to one of claims 1 to 30, **characterised in that** it is combined with a supporting substrate in the form of an arrangement, device or a layer.

32. Element according to one of claims 1 to 31, **characterised in that** it is a self-supporting arrangement.

## Revendications

1. Elément plat, sombre, à faible conductivité thermique, masse volumique réduite et faible absorption solaire, **caractérisé en ce que**
a) il comporte au moins une combinaison d'un matériau support dans lequel sont inclus des composants, où
b) la combinaison a) a une conductivité thermique inférieure à 0,4 [W/m.K] et
c) une masse volumique apparente qui est inférieure à 1,4 g/cm³,
d) l'élément a une réflexion moyenne dans le domaine de longueurs d'onde de la lumière visible de 400 à 700 nm qui est inférieure à 50 % et
e) l'élément a une réflexion moyenne dans le domaine de longueurs d'onde du proche infrarouge de 700 à 1000 nm qui est supérieure à 50 %.

2. Elément selon la revendication 1 **caractérisé en ce que** le matériau support est une matière synthétique, une couche de vernis, un matériau fibreux, une masse à prise hydraulique et/ou un matériau composite.

3. Elément selon la revendication 2 **caractérisé en ce que** la matière synthétique est choisie dans la série des polyamides, polyacétates, polyesters, polycarbonates, polyoléfines, des polymères du styrène, des polymères soufrés, des matières synthétiques fluorées, des polyimides, des poly(méthacrylates de méthyle) (PMMA), du poly(chlorure de vinyle), des silicones, des résines époxyde, des mélanges de polymères, du polycarbonate - acrylonitrile-butadiène-styrène (ABS) ainsi que des résines de mélamine, phénoliques et des polyuréthanes et de leurs mélanges appropriés.

4. Elément selon l'une des revendications 2 ou 3 **caractérisé en ce que** le matériau support peut être aussi bien une matière synthétique à réticulation réactive qu'une matière synthétique thermoplastique.

5. Elément selon la revendication 2 **caractérisé en ce que** la couche de vernis est formée à partir d'un liant qui est choisi dans la série des liants solubles dans l'eau parmi les alkydes, polyesters, polyacrylates, époxydes et esters époxydiques, des dispersions et émulsions aqueuses à base d'acrylates, styrène-acrylates, copolymères éthylène-acide acrylique, méthacrylates, copolymères vinylpyrrolidone-acétate de vinyle, polyvinylpyrrolidone, poly(acrylate d'isopropyle), polyuréthane, silicone et poly(acétates de vinyle), des dispersions de cires, à base de polyéthylène, polypropylène, polytétrafluoroéthylène (Téflon^{®}), cires synthétiques, polymères fluorés, copolymère acrylique fluoré en solution aqueuse, fluorosilicones, et des résines de polyuréthane modifiées par le fluor en position terminale et/ou latérale et/ou intrachaîne, dispersions de polyuréthane et dispersions hybrides polyuréthane-polymère et leurs mélanges.

6. Elément selon la revendication 2 **caractérisé en ce que** la couche de vernis est formée à partir d'un liant qui est choisi dans la série des liants contenant un solvant, à base d'acrylates, styrène-acrylates, polyvinyle, poly(chlorure de vinyle), polystyrène et copolymères du styrène, résines alkyde, polyesters saturés et insaturés, polyesters hydroxyde-fonctionnels, résines mélamine-formaldéhyde, résines de polyisocyanate, polyuréthanes, résines époxydes, polymères fluorés et silicones, polyéthylène chlorosulfoné, polymères fluorés, copolymère acrylique fluoré, fluorosilicones, plastisols, poly(difluorure de vinyle) (PVDF) et des résines de polyuréthane modifiées par le fluor en position terminale et/ou latérale et/ou intrachaîne, dispersions de polyuréthane et dispersions hybrides polyuréthane-polymères et leurs mélanges.

7. Elément selon l'une des revendications 5 ou 6 **caractérisé en ce que** les résines de polyuréthane modifiées par le fluor en position terminale et latérale et/ou intrachaîne sont des polymères modifiés par le fluor qui contiennent des éléments structuraux polymères en position terminale et/ou latérale et/ou dans la chaîne principale à base de groupes perfluoroalkyl(ène) et/ou poly(oxyde d'hexafluoropropène).

8. Elément selon la revendication 2 **caractérisé en ce que** le matériau fibreux est du cuir issu de peaux d'animaux.

9. Elément selon la revendication 2 **caractérisé en ce que** la masse à prise hydraulique est un mélange à base de ciment, de sulfate de calcium ou d'anhydrite.

10. Elément selon la revendication 2 **caractérisé en ce que** le matériau composite contient des fibres synthétiques en matières synthétiques et/ou substances céramiques et/ou des fibres naturelles en laine, coton, sisal, chanvre et cellulose.

11. Elément selon l'une des revendications 1 à 10 **caractérisé en ce que** les composants inclus dans le matériau support sont choisis dans les groupes suivants :
a) les charges légères inorganiques et/ou organiques qui abaissent de préférence la masse volumique et la conductivité thermique du matériau support,
b) les gaz qui forment des cavités dans le matériau support et qui abaissent la masse volumique et la conductivité thermique du matériau support et
c) les colorants qui réfléchissent de manière spectralement sélective dans le domaine de longueurs d'onde de la lumière visible de 400 à 700 nm et qui présentent une transparence moyenne supérieure à 50 % dans le domaine de longueurs d'onde du proche infrarouge de 700 à 1000 nm et/ou
d) des premiers pigments qui réfléchissent de manière spectralement sélective dans le domaine de longueurs d'onde de la lumière visible de 400 à 700 nm et qui présentent une transparence moyenne supérieure à 50 % dans le domaine de longueurs d'onde du proche infrarouge de 700 à 1000 nm et/ou
e) des seconds pigments qui réfléchissent de manière spectralement sélective dans le domaine de longueurs d'onde de la lumière visible de 400 à 700 nm et qui présentent une réflexion moyenne supérieure à 50 % dans le domaine de longueurs d'onde du proche infrarouge de 700 à 1000 nm,
f) des nanomatériaux inorganiques et/ou organiques qui peuvent être traités en surface ou revêtus en surface.

12. Elément selon la revendication 11 **caractérisé en ce que** les charges légères sont des charges légères dont la masse volumique est située en dessous de 0,5 g/cm³.

13. Elément selon l'une des revendications 11 ou 12 **caractérisé en ce qu'**il s'agit de microbilles creuses en un matériau céramique, en verre ou en une matière synthétique où la masse volumique des microbilles creuses en verre ou en un autre matériau céramique est située en dessous de 0,4 g/cm³ et la masse volumique des microbilles creuses en une matière synthétique est située en dessous de 0,2 g/cm³.

14. Elément selon l'une des revendications 11 à 13 **caractérisé en ce que** les charges légères sont des particules de matière synthétique qui ne forment des microbilles creuses d'une masse volumique inférieure à 0,2 g/cm³ que lors du chauffage du matériau support à des températures de 80 à 160°C.

15. Elément selon la revendication 11 **caractérisé en ce que** les colorants sont des colorants solubles dans l'eau choisis parmi les colorants acides, les colorants substantifs, les colorants basiques, les colorants de développement, les colorants soufrés et les colorants d'aniline, ou des colorants choisis dans le groupe des colorants qui sont dissous avec des solvants, choisis parmi les colorants zapons.

16. Elément selon la revendication 11 **caractérisé en ce que** les premiers pigments sont choisis parmi les pigments monoazoïques, disazoïques, d'a-naphtol, de naphtol-AS, d'azobenzimidazolone vernis, de disazocondensation, de complexes métalliques, d'isoindolinone et d'isoindoline, les pigments de phtalocyanine, de quinacridone, de perylène et de périnone, de thioindigo, d'anthraquinone, d'anthrapyrimidine, de flavanthrone, de pyranthrone, d'indanthrone, d'anthanthrone, de dioxazine, de triarylcarbonium, de quino-phtalone, de dicéto-pyrrolo-pyrrole.

17. Elément selon la revendication 11 **caractérisé en ce que** les seconds pigments sont des pigments inorganiques choisis dans la série des oxydes et hydroxydes métalliques, parmi les pigments de cadmium, bismuth, chrome, outremer, des pigments de mica lamellaires revêtus et des pigments de type rutile et de type spinelle à phases mixtes.

18. Elément selon l'une des revendications 1 à 17 **caractérisé en ce que** d'autres particules qui présentent une réflexion supérieure à 70 % dans le domaine de longueurs d'onde de 400 à 1000 nm sont introduites dans le matériau support.

19. Elément selon la revendication 18 **caractérisé en ce que** les autres particules sont choisies dans le groupe des pigments inorganiques, dans le groupe des oxydes métalliques, des sulfates métalliques, des sulfures métalliques, des fluorures métalliques, des silicates métalliques, des carbonates métalliques ainsi que de leurs mélanges.

20. Elément selon l'une des revendications 18 ou 19 **caractérisé en ce que** les autres particules sont choisies dans le groupe des matériaux dégradables choisis parmi le carbonate de calcium, le carbonate de magnésium, le talc, le silicate de zirconium, l'oxyde de zirconium, l'oxyde d'aluminium, le sulfate de baryum naturel et leurs mélanges.

21. Elément selon l'une des revendications 1 à 20 **caractérisé en ce que** la conductivité thermique de l'élément est inférieure à 0,3 [W/m.K] et de manière particulièrement préférée inférieure à 0,2 [W/m.K].

22. Elément selon l'une des revendications 1 à 21 **caractérisé en ce que** la masse volumique apparente de l'élément est située en dessous de 1,2 g/cm³ et de manière particulièrement préférée en dessous de 1,0 g/cm³.

23. Elément selon l'une des revendications 1 à 22 **caractérisé en ce qu'**il a une réflexion moyenne dans le domaine de longueurs d'onde de la lumière visible de 400 à 700 nm qui est inférieure à 40 %.

24. Elément selon l'une des revendications 1 à 23 **caractérisé en ce qu'**il a une réflexion moyenne dans le domaine de longueurs d'onde du proche infrarouge de 700 à 1000 nm qui est supérieure à 60 %.

25. Elément selon l'une des revendications 1 à 24 **caractérisé en ce que** les charges légères augmentent la réflexion de l'élément dans le domaine du proche infrarouge de 700 à 1000 nm de jusqu'à 10 %.

26. Elément selon l'une des revendications 1 à 25 **caractérisé en ce que** la combinaison a) possède en outre les caractéristiques d) et/ou e) de l'élément.

27. Elément selon l'une des revendications 1 à 26 **caractérisé en ce qu'**il se compose d'au moins deux couches où au moins une couche consiste en la combinaison a).

28. Elément selon l'une des revendications 1 à 27 **caractérisé en ce que** la combinaison a) est combinée avec une couche de matériau support qui ne contient aucun composant inclus.

29. Elément selon l'une des revendications 1 à 28 **caractérisé en ce que** des formes de réalisation de l'élément identiques ou différentes sont combinables de manière superposée dans au moins deux couches.

30. Elément selon l'une des revendications 1 à 29 **caractérisé en ce qu'**il est muni d'une couche de vernis supplémentaire qui est de préférence une couche de vernis transparente.

31. Elément selon l'une des revendications 1 à 30 **caractérisé en ce qu'**il est combiné avec un substrat porteur sous forme d'un agencement, d'un dispositif ou d'une couche.

32. Elément selon l'une des revendications 1 à 31 **caractérisé en ce qu'**il constitue un agencement autoporteur.
